(19) Europäisches Patentamt
European Patent Office
Office européen des brevets

(11) EP 2 751 213 B2

(12) **NEW EUROPEAN PATENT SPECIFICATION**
After opposition procedure

(45) Date of publication and mention of the opposition decision:
**06.04.2022 Bulletin 2022/14**

(45) Mention of the grant of the patent:
**10.04.2019 Bulletin 2019/15**

(21) Application number: **12759862.1**

(22) Date of filing: **31.08.2012**

(51) International Patent Classification (IPC):
***C09J 7/22*** *(2018.01)* ***C09J 7/20*** *(2018.01)*
***C08L 27/06*** *(2006.01)*

(52) Cooperative Patent Classification (CPC):
(C-Sets available)
**C08L 27/06; C09J 7/201; C09J 7/22;** C08K 5/5419;
C09J 2301/41 (Cont.)

(86) International application number:
**PCT/US2012/053261**

(87) International publication number:
**WO 2013/033484 (07.03.2013 Gazette 2013/10)**

# (54) SELF ADHESIVE FILM AND METHOD TO MINIMIZE OR ELIMINATE PRINT DEFECTS IN SUCH FILM

SELBST-KLEBENDER FILM UND VERFAHREN ZUR MINIMIERUNG ODER BESEITIGUNG DER DRUCKFEHLER DIESER FILMEN

FILM AUTO-ADHÉSIF ET MÉTHODE POUR MINIMISER OU ÉLIMINER LES DÉFAUTS D' IMPRESSION SUR CES FILMS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2011 US 201161529888 P**

(43) Date of publication of application:
**09.07.2014 Bulletin 2014/28**

(73) Proprietor: **Avery Dennison Corporation**
**Pasadena, CA 91103 (US)**

(72) Inventors:
- **SRIVATSAN, Nagarajan**
  **Pasadena, CA 91103 (US)**
- **MALLYA, Prakash**
  **Pasadena, CA 91103 (US)**
- **CHACKO, Sujith**
  **Pasadena, CA 91103 (US)**
- **RAMSAY, Michael**
  **Pasadena, CA 91103 (US)**
- **WESSELING, Jolanda**
  **Pasadena, CA 91103 (US)**
- **MILLER, Stuart**
  **Pasadena, CA 91103 (US)**

(74) Representative: **Müller-Boré & Partner Patentanwälte PartG mbB**
**Friedenheimer Brücke 21**
**80639 München (DE)**

(56) References cited:
**EP-A1- 2 070 712**
**EP-A2- 0 523 527**
**EP-B1- 1 943 103**
**WO-A1-2005/054346**
**WO-A2-2007/115008**
**DE-A1- 19 943 330**
**JP-A- H0 687 996**
**US-A- 5 346 766**

- **Printout websites Renolit**

EP 2 751 213 B2

(52) Cooperative Patent Classification (CPC): (Cont.)

C-Sets
**C08L 27/06**

## Description

The present invention is in the field of self-adhesive ink jet printable polymer films. More particularly, the present invention provides a self-adhesive film configured to minimize or eliminate print defects and enhance the film's print resolution when such films are printed thereon with a suitable print media such as, for example, by an ink-jet printing process.

Self-adhesive polymer films find extensive use in a wide range of graphics applications such as decorative or information display sheets for cars, trucks, store fronts, building sides, etc. Such films find wide acceptance because they are generally inexpensive, weather resistant, and easy to pigment or dye. Additionally, such films can be conveniently printed with the desired graphics using a wide range of print and ink technologies. In particular cast and calendered PVC films find wide acceptance because of the range of properties that can be readily engineered at a low cost.

Extremely conformable PVC films can be produced through the use of polymeric plasticizers. When coated with an adhesive, such PVC films readily conform and adhere to deep corrugations such as the side panels of trucks. White pigmented or transparent self-adhesive PVC films can be readily printed using wide format roll fed printers employing a variety of solvent, ecosolvent and latex inks.

Despite the excellent physical properties and printability of such films, PVC films have suffered from print defects. Print defects often encountered with self-adhesive films include lack of printing uniformity and low resolution.

WO 2005/054346 A1 relates to a silicone release polyester film of a coextruded polyester film or sheet, wherein one surface of the coextruded polyester film or sheet is coated with silicone release liquid, wherein the outmost layer on the surface of the coextruded polyester film or sheet to be silicone-coated contains PET-I, PET-G or a copolymer thereof. Said release film does not negatively affect printability of self adhesive print films.

The present invention provides, in one aspect, a self adhesive print film as characterized in claim 1. In one embodiment, the print resolution of the film does not change significantly with time, temperature and pressure.

In a further exemplary embodiment of the presently described invention, an advertising graphic is presented and includes PVC and silicone.

In one aspect, the present invention provides a self adhesive film comprising a polymeric layer having an upper surface and a lower surface, the polymeric layer adapted to receive a print media on the upper surface; and an adhesive layer disposed on the lower surface of the polymeric layer; wherein the polymeric layer is formed from a polymer formulation including a low surface energy additive, the low surface energy additive being in a substantially free form.

According to the present invention, the polymeric layer comprises from 1 to 10 wt.%;preferably from 1 to 2.5 wt.% of the low surface energy additive.

In one embodiment, the polymeric layer comprises 3 Atomic% or greater of Si atoms at the surface of the polymeric layer; 4 Atomic % or greater of Si atoms at the surface of the polymeric layer; 5 Atomic % or greater of Si atoms at the surface of the polymeric layer; even 10 atomic % or greater of Si atoms at the surface of the polymeric layer, measured using X-ray photoelectron spectroscopy. In one embodiment, the polymeric layer comprises Si atoms at the surface of the polymeric layer in a concentration of 3 atomic % to 15 atomic %; 4 atomic % to 12 atomic %; even 5 atomic % to 10 atomic %.

In another aspect, the present invention provides a process for improving the print resolution of a self adhesive film provided in a roll form as characterized in claim 6, the method comprising providing a polymer film layer having an upper surface for receiving a print media thereon, and a lower surface opposite the upper surface; providing an adhesive film layer on the lower surface polymer film layer; and providing a release liner having an upper surface comprising a release coating thereon, and a lower surface, the lower surface of the release liner contacting the upper surface of the polymer film layer when the self adhesive film is wound about itself into a roll; wherein the polymer film layer comprises from 1 to 10 wt. % of a low surface energy additive, the low surface energy additive being distributed within the polymer layer, wherein providing the polymeric layer comprising the low surface energy additive comprises providing a polymer formulation including the low surface energy additive and forming a film layer from the polymer formulation, wherein the low surface energy additive is a silicone-containing material chosen from a siloxane, wherein the low surface energy additive is not a part of a copolymer comprising a monomer or polymer component other than a low surface energy material and the low surface energy additive is not coated onto a surface of another additive.

Other features and advantages of the present invention will become apparent to those skilled in the art from the following detailed description. It is to be understood, however, that the detailed description of the various embodiments and specific examples, while describing various embodiments of the present invention, are given by way of illustration and not limitation.

FIG. 1 is a cross-sectional view of an adhesive film in accordance with an embodiment of the present invention;

FIG. 2 is a cross-sectional view of a release liner in accordance with an embodiment of the present invention;

FIG. 3 are graphs illustrating the area distribution of dot-like features printed onto vinyls that (a) were not and (b) were exposed to the liner backside;

FIG. 4 shows graphs illustrating the silicon level detected on the liner backside under various conditions;

FIG. 5 shows (a) a picture of the distribution of dots on a vinyl film with regions exposed to siliconized liner backside and non-siliconized liner backside; and (b) a graph showing the distribution of the dot-like features;

FIG. 6 is a graph illustrating the size of printed dots as a function of contact time between a vinyl face with a liner backside;

FIG. 7 is a graph illustrating the surface silicon concentration as a function of the amount of siloxane added to the vinyl formulation;

FIG. 8 shows atomic force microscope images of vinyl surfaces with various siloxane concentrations;

FIG. 9 is a graph illustrating the dependence of print dot size on the amount of silicon on the vinyl surface;

FIG. 10 is a graph illustrating the amount of silicon on the surface as a function of amount of siloxane added to the vinyl formulation;

FIG. 11 shows atomic force microscope images of a vinyl surface with and without siloxane added to the formulation; and

FIG. 12 is a graph illustrating the print dot size as a function of siloxane level in the formulation.

Unless otherwise indicated, the illustrations in the above figures are not necessarily drawn to scale.

The apparatuses and methods disclosed in this application are described in detail by way of various embodiments, examples, and with reference to the figures. Unless otherwise specified, like numbers in the figures indicate references to the same, similar, or corresponding elements throughout the figures. It will be appreciated that modifications to disclosed and described examples, arrangements, configurations, components, elements, apparatuses, methods, materials, etc. can be made and may be desired for a specific application. In this disclosure, any identification of specific shapes, materials, techniques, arrangements, etc., are either related to a specific example presented or are merely a general description of such a shape, material, technique, arrangement, etc.

The present invention provides a self-adhesive film used for ink jet printed graphic applications, advertising, promotions, and other marketing campaigns. As used herein the term "graphic" or "graphics" refers to a visually perceptible presentation on some surface that is intended to brand, illustrate, entertain, inform, advertise, announce and market a product, service, event or the like.

FIG. 1 illustrates a self adhesive film 100 in accordance with an embodiment of the invention. Film 100 comprises a release liner 110 having a front surface 112 and a back surface 114, an adhesive layer 120 disposed on the front surface of the release liner, and a graphics or print layer 130 overlying the adhesive layer 120. The graphics layer 130 is adapted to receive ink or other suitable print media to form an image on the graphics layer 130. In accordance with embodiments of the invention, at least one of the release liner 110 and the graphics layer 130 are configured to provide a self adhesive film having improved print characteristics.

FIG. 2 illustrates a detailed embodiment of the release liner 110 in accordance with aspects of the present invention. In FIG. 2, release liner 110 comprises a paper layer 113 having a polymer layer 115 disposed on an upper surface of the paper layer, and a polymer layer 111 disposed on a lower surface of the paper layer. The lower surface of the bottom polymer layer 111 defines the back surface 114 of the release liner. The release liner comprises a silicone release coating 117 disposed on the top polymer layer 115. The silicone release coating 117 defines the front surface 112 of the release liner.

Prior to use in forming an adhesive film, a release liner is typically provided in wound or roll form. While not illustrated, it will be appreciated by a person skilled in the art that the back surface 114 comes into contact with front surface 112 when the release liner is wound about itself into a roll form. Depending on the conditions under which the release liner is stored or as may be encountered during shipping, the roll of the release liner may be subjected to sufficient pressure and temperature conditions such that some residual silicone from the silicone release coating may be transferred to the back surface 114 of the release liner. The residual silicone may be in the form of silicone-containing monomers or oligomers that have not been reacted during the curing of the silicone release layer in forming the release liner. The distribution of the residual silicone may be generally non-uniform over the length and width of the back surface of the liner. The non-uniform distribution may be a product of the conditions that the liner roll is exposed to during rolling, storage, or shipping including, for example, temperature and pressure, as well as contact time between the respective surfaces. Non-uniform contact between the back surface of the release liner and the silicone surface of the coated release layer may also result from non-uniform thickness of the respective layers over the length and width of the release liner.

When an adhesive film comprising such liners, such as film 100 of FIG. 1, is wound into a roll for storage or shipping, the back side 114 of the release liner contacts an upper surface 132 of the print layer 130. Residual silicone material from the back side 114 of the release liner may be transferred to print surface 132 of the print layer depending on the temperature and pressure conditions under which the film is stored as well as the contact time between the respective surfaces. Non-uniform contact between the back side 114 of the liner and the print surface 132, non-uniform distribution of silicone on the back side 114 of the liner, or both, may result in non-uniform distribution of silicone material

on the print surface 132. Silicone material may affect the print resolution and printability of the print surface 132, and non-uniform distribution of silicone material may impact the resolution and overall print quality. For example, the print surface may exhibit non-uniform resolution including, regions of high print resolution and regions of low print resolution.

In accordance with the present invention, at least the print layer is configured to control the distribution of silicone on the print surface of the print layer. In one embodiment, the back surface of the release liner is corona treated. While not being bound to any particular theory, it is believed that corona treating the back surface polymerizes the residual silicone and/or converts free silicone on the back surface of the liner to silicate so as to reduce the concentration of free silicone on the back surface to negligible levels. Reducing the concentration of silicone on the back surface of the release liner may avoid contamination of the print face.

In accordance with the present invention, control of this film's print resolution comprises treating the print layer composition with a low surface energy additive or additives. The print layer comprises a sufficient concentration of low surface energy additive such that minimal print resolution changes are detected upon exposure of the film surface to the back of a siliconized liner, and, all other mechanical and physical properties of the film are substantially unaltered. The present invention provides a print film having substantially uniform print resolution or print qualities across the length and width of the film rolls despite (1) non-uniform contact of the print film surface with the back surface of the release liner, and (2) a possible non-uniform distribution of silicone on the back of the release liner. The technology can be utilized with films that are produced through a casting process or a calendering process. In particular, the technology can be employed with cast PVC films, where during the film formation process temperatures of up to 200°C are employed.

The print layer can be provided with a low surface energy additive in various manners as desired for a particular purpose or intended use. In one embodiment, the low surface energy additive can be dispersed in the polymeric layer, e.g., as part of the polymeric formulation employed to form the print layer.

In one embodiment, the low surface energy additive is provided in the print film composition in a substantially free form in the print layer. The low surface energy additive is considered to be in "a substantially free form," when it is not a part of a copolymer comprising a monomer or polymer component other than a low surface energy material, or it is not coated onto a surface of another additive, e.g., particulate matter such as a filler material. Applicants have found that the low surface energy additive can be added in a substantially free form.

The low surface energy material is a silicone-containing material selected from a siloxane. In one embodiment, the low surface energy material has a surface energy of 0.05 N/m (50 dynes/cm) or less, 0.025 N/m (25 dynes/cm) or less, 0.02 N/m (20 dynes/cm) or less, 0.015 N/m (15 dynes/cm) or less, even 0.01 N/m (10 dynes/cm) or less. In one embodiment, the low surface energy material has a surface energy of from 0.005 to 0.05 N/m (5 to 50 dynes/cm), 0.01 to 0.04 N/m (10 to 40 dynes/cm), even 0.015 to 0.025 N/m (15 to 25 dynes/cm).

Suitable siloxane materials include siloxanes of the formula:

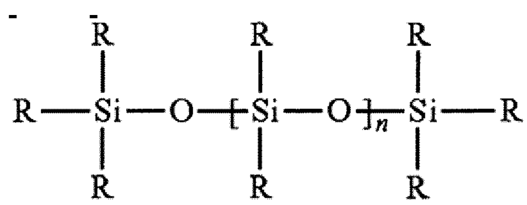

where the R groups can all be the same or any combination of alkyl, aryl, alkenyl, alkinyl, acyl, alkoxy, glycidyl. Siloxanes suitable for use as the low surface energy additive include siloxane, available from Dow Corning such as, for example, Z-6173, an alkoxy functional siloxane; Z-6018, a reactive silicone and 556, a polyphenylmethylsiloxane. Other suitable siloxanes include those available from Wacker Silicones under the tradename Silres including, but not limited to, Silres IC 232, a reactive methoxy functional methyl-phenyl polysiloxane and Silres H62 C, a heat curable liquid silicone. Mixtures of siloxanes and silanes are also suitable as the low surface energy additive including materials such as Silres BS 2280, a silane/siloxane combination from Wacker Silicones. In another embodiment, where the film or print layer of the film is cast out of an aqueous medium, the low surface energy additive may be chosen from silicone-containing materials such as aqueous dispersions of siloxanes. Examples of suitable silicone additives that may be included in print layers or films cast out of aqueous media include, but are not limited to, Silres BS 4004, Silres BS 50, Silres BS 3003, Silres Creme N, Silres BS 1001, Silres MP 50 E, Silres BS 2002, Silres BS 54, Silres BS 45, Silres BS 43 N, Silres BS 1306, Silres BS 29, Silres BS 1042 (reactive PDMS), Silres BS Creme C, Silres BS 46, and Silres BS 1006 from Wacker Chemie AG. Fluorotelomer alcohols, and fluorotelomer iodides can be potentially included in the formulation to alter the surface characteristics of the print film. These are sold by Dupont under the trade name Zonyl. Fluoro surfactants that are miscible with Organic resins can also be used to improve the printability of the film. Other low molecular weight perfluoro polymers and similar polymers also can be used as potential additives in to the system.

In one embodiment, the print film can be cast out of an organic solvent or obtained through extrusion or

calendaring. In one embodiment employing a cast white pigmented PVC film, the low surface energy additive is an alkoxy functional siloxane such as Z-6173 from Dow Corning. In one embodiment employing a clear PVC film, the low surface energy additive is a siloxane such as Z-6018 (Dow Corning) or 556 (Dow Corning) with refractive indices and solubility parameters better matched to the PVC formulation. In the case of the pigmented PVCs, the siloxane additives may be compounded with the pigment separately and then the modified pigment may be added to the formulation, or the siloxanes may be directly added to the formulation, whereas, in the case of the clear PVC films the additives can be directly added to the formulation. While the low surface energy additive may be compounded with the pigment, the additive is still in a substantially free form rather than being coated onto the surface of pigment particles.

The concentration of low surface energy additive in the print facestock composition ranges from 1 to 10 wt.%, an amount sufficient to minimize any substantial change in the print uniformity and print resolution of the print facestock upon exposure of the print facestock surface to the back side of a siliconized release liner. Further, it is desired that the low surface energy additive does not substantially alter other mechanical or physical properties of the film. In one embodiment, the concentration of low surface energy additive ranges from 1 to 2.5 wt.%. In another embodiment, the concentration is from 1.0 to 5 wt.%. Applicant's have found that the print uniformity and print resolution of the facestock layer remains substantially consistent even after exposure to and contact with a back side surface of a release liner (having residue/silicone-material thereon) when the concentration of Si atoms at the surface of the print facestock layer is at least 3 Atomic % or greater. In one embodiment, the print layer comprises a concentration of low surface energy additive sufficient to provide 3 Atomic% or greater of Si atoms at the surface of the print facestock layer. In one embodiment, the concentration of surface Si atoms is 4 Atomic % or greater. In another embodiment, the concentration of surface Si atoms is 5 Atomic % or greater. In still another embodiment, the concentration of surface Si atoms is 10 atomic % or greater. In one embodiment, the concentration of surface Si atoms is 3 atomic % to 15 atomic %. In one embodiment, the concentration of surface Si atoms is 4 atomic % to 12 atomic %. In one embodiment, the concentration of surface Si atoms is 5 atomic % to 10 atomic %.

Providing the print layer with a low surface energy additive has been found to provide a surface with a substantial distribution of Si atoms such that the transfer of silicone material from the back surface of the release liner to the print surface, even the non-uniform transfer from non-uniform contact between the layers or non-uniform distribution of silicone on the back surface of the release liner will not negatively impact the print resolution. That is, in one embodiment, the print layer with a low surface energy additive may exhibit a first print resolution prior to being in contact with a back surface of a liner contaminated with residual silicone, and a second print resolution subsequent to being in contact with a back surface of a liner contaminated with residual silicone, where the first print resolution is substantially similar to the second print resolution.

As described above, the adhesive article may comprise a print facestock layer, an adhesive layer, a plurality of discrete quantities of non-adhesive material, and a release liner. The print facestock may be any material suitable for such a layer including those that are useful for decorative or graphic image applications. The print facestocks may have any desired thickness and may have, for example, a thickness from 10 microns to 300 microns, or from 25 microns to 125 microns. In one embodiment, the facestock comprises a polymeric material. Material suitable for the print facestock include, but are not limited to, vinyl halides, polyolefins (linear or branched), polyamides, polystyrenes, nylon, polyesters, polyester copolymers, polyurethanes, polysulfones, polyvinylchloride, styrene-maleic anhydride copolymers, styrene-acrylonitrile copolymers, ionomers based on sodium or zinc salts of ethylene methacrylic acid, polymethyl methacrylates, cellulosics, fluoroplastics, acrylic polymers and copolymers, polycarbonates, polyacrylonitriles, and ethylene-vinyl acetate copolymers. Included in this group are acrylates such as ethylene methacrylic acid, ethylene methyl acrylate, ethylene acrylic acid and ethylene ethyl acrylate. Also, included in this group are polymers and copolymers of olefin monomers having, for example, 2 to 12 carbon atoms, and in one embodiment 2 to 8 carbon atoms. These include the polymers of alpha-olefins having from 2 to 4 carbon atoms per molecule. These include polyethylene, polypropylene, poly-1-butene, etc. An example of a copolymer within the above definition is a copolymer of ethylene with 1-butene having from 1 to 10 weight percent of the 1-butene comonomer incorporated into the copolymer molecule. The polyethylenes that are useful have various densities including low, medium and high density ranges. The low density range is from 0.910 to 0.925 g/cm$^3$; the medium density range is from 0.925 to 0.940 g/cm$^3$; and the high density range is from 0.94 to 0.965 g/cm$^3$. Films prepared from blends of copolymers or blends of copolymers with homopolymers also are useful. The films may be extruded as a monolayer film or a multi-layered film.

In one embodiment, the print facestock may comprise a material and be configured as described in U.S. Application Serial No. 12/323,788.

In one embodiment, the print facestock comprises a vinyl halide. Examples of suitable vinyl halides include, but are not limited to polyvinylchloride (PVC), vinyl acetate, ethylene vinyl chloride copolymer, etc. An exemplary print facestock is a polyvinylchloride facestock. The facestock may include migratory additives such as plasticizers and antioxidants. The plasticizer may be a high-boiling solvent or softening agent, usually liquid. It is an ester made from an anhydride or acid and a suitable alcohol that usually has between 6 to 13 carbon atoms. Suitable plasticizers include adipate, phosphate, benzoate or phthalate esters, polyalkylene oxides, sulfonamides, etc. Examples of plasticizers

include, but are not limited to, DOA plasticizer (dioctyl adipate), TEG-EH plasticizer (triethylene glycol di-2-ethylhexanoate), TOTM plasticizer (trioctyl trimellitate), triacetin plasticizer (glyceryl triacetate), TXIB plasticizer (2,2,4-trimethyl-1,3-pentanediol diisobutyrate), DEP plasticizer (diethyl phthalate), DOTP plasticizer (dioctyl terephthalate), DMP plasticizer (dimethyl phthalate), DOP plasticizer (dioctyl phthalate), DBP plasticizer (dibutyl phthalate), polyethylene oxide, toluenesulfonamide, dipropylene glycol benzoate, and the like.

The print facestock may be configured or shaped as desired for a particular purpose or intended use. The print facestock may be a single layer or may comprise multiple layers. Multiple layers may be employed to provide protection, weatherability, printability or other characteristics to the adhesive article. Indicia or graphics, such as information, logos, designs, phrases, pictures, or the like may be applied to the substrate or facestock. In one embodiment, the print facestock may comprise a material and be configured as described in U.S. Application Serial No. 12/323,788.

As described above, the low surface energy material can be added directly to the polymer film formulation for forming the print layer. This may also be referred to as doping the polymer (print) film formulation with the low surface energy additive. Doping the polymer film formulation comprises doping the film formulation with silicone.

In one embodiment, indicia may be applied by printing a surface of the substrate or facestock. For example, a print facestock may carry or have printed thereon indicia, which may depict writing, design(s), logo(s), picture(s), or other desired indicia. In one embodiment, printed indicia may represent printed regions printed directly onto the surface of the print facestock. The facestock may be printed prior to or after being applied to the adhesive.

Other layers or laminates may be provided to cover or protect the indicia. In one embodiment, the print film may comprise a laminate such as those described in U.S. Patent Application Serial No. 13/040,642.

The adhesive layer may be formed from any suitable adhesive material as desired for a particular purpose or intended use. In one embodiment, the adhesive layer comprises a pressure sensitive adhesive layer. In some applications, the adhesive may be a heat activated adhesive, as distinguished from a pressure sensitive adhesive. The pressure-sensitive adhesive can be any pressure sensitive adhesive now known in the art or later discovered. These include rubber based adhesives, acrylic adhesives, vinyl ether adhesives, silicone adhesives, and mixtures of two or more thereof. Included are the pressure sensitive adhesive materials described in "Adhesion and Bonding", Encyclopedia of Polymer Science and Engineering, Vol. 1, pages 476-546, Interscience Publishers, 2nd Ed. 1985. The pressure sensitive adhesive materials that are useful may contain as a major constituent an adhesive polymer such as acrylic type polymers, block copolymers, natural, reclaimed or styrene butadiene rubbers, tackified natural or synthetic rubbers, random copolymers of ethylene and vinyl acetate, ethylene-vinyl-acrylic terpolymers, polyisobutylene, poly(vinyl ether), etc. The pressure sensitive adhesive can be made from petroleum based material, or renewable bio-based material. The pressure sensitive adhesive materials are typically characterized by glass transition temperatures in the range of -70°C to 10°C.

Other materials in addition to the foregoing resins may be included in the pressure sensitive adhesive materials. These include solid tackifying resins, liquid tackifiers (often referred to as plasticizers), antioxidants, fillers, pigments, waxes, etc. The adhesive materials may contain a blend of solid tackifying resins and liquid tackifying resins (or liquid plasticizers). Particularly useful adhesives are described in U.S. Pat. Nos. 5,192,612 and 5,346,766.

The thickness of the adhesive layer is not particularly limited and may be selected as desired for a particular purpose or intended use. In one embodiment, the adhesive layer may have a thickness from 10 to 125 microns, or from 10 to 75 microns, or from 10 to 50 microns. In one embodiment, the coat weight of the pressure sensitive adhesive may be in the range of 10 to 50 grams per square meter (gsm), and in one embodiment 20 to 35 gsm.

The construction of the adhesive layer is not limited and may be any suitable construction or configuration as desired for a particular purpose or intended use. For example, in one embodiment, the adhesive layer may be a single layer construction. In another embodiment, the adhesive layer may be a multi-layer construction comprising two or more adhesive layers. In one embodiment, the adhesive layer(s) may also be substantially continuous. In another embodiment, the adhesive layer(s) may be provided as a discontinuous layer or layers. Further the adhesive may be patterned or comprise regions of different adhesive strength or initial tack.

Release liners for use in the present invention may include any suitable liner that is capable of releasable attachment to the adhesive large in the art or those later discovered. In general, suitable release liners include, but are not limited to, polyethylene coated papers with a commercial silicone release coating, polyethylene coated polyethylene terephthalate films with a commercial silicone release coating, or cast polypropylene films that can be embossed with a pattern or patterns while making such films, and thereafter coated with a commercial silicone release coating. In one embodiment, the release liner has a configuration similar to that of FIG. 2 and comprises kraft paper (e.g., layer 113) that has a coating (layer 115) of low density polyethylene on the front side with a silicone release coating (117) and a coating (111) of high density polyethylene or polypropylene on the back side. Other release liners known in the art are also suitable as long as they are selected for their release characteristics relative to the pressure sensitive adhesive chosen for use in the adhesive article, that is, the adhesive will have a greater affinity for the face stock than the liner.

In one embodiment, the release liner has a moldable layer of polymer under the release coating. The moldable layer is typically a polyolefin, such as polyethylene or polypropylene. The surface of the release layer of the release liner may have a textured finish, a smooth finish, or a patterned finish. The release layer may have a randomly microstructured

surface such as a matte finish, or have a pattern of three-dimensional microstructures. The microstructures may have a cross-section which is made up of circles, ovals, diamonds, squares, rectangles, triangles, polygons, lines or irregular shapes, when the cross-section is taken parallel to the surface of the release surface. An example of such liners include those described in U.S. Application Serial No. 11/757,535.

A process for manufacturing a roll of self adhesive polymer films may comprise providing a base paper with a front side and a back side, and coating the front and back side of the base paper with a desired thickness of a polyolefin material to make the liner material. The polyolefin can be coated by any known coating techniques included, but not limited to, extrusion coating. The thickness of the coating may be 20-30 microns, though any thickness suitable for the application is acceptable. A release material, such as silicone is then coated and cured onto the front side of the liner. In an optional step, the polyolefin layer on the backside of the liner may be perforated to allow moisture ingress and egress from the base paper. The finished release coated liner is then typically wound into roll form for storage and shipping purposes.

Examples of suitable release liners in roll form include those available from Mondi Inncoat, Wassau, or Loparex. It will be appreciated that the backside polyolefin layer comes into contact with the front side silicone release coating when the release liner is in roll form.

A polymer formulation including a low surface energy additive is prepared and formed into a film by any suitable process including, but not limited to, casting or calendaring onto a substrate or casting sheet. Optionally, a tie layer may be coated onto the film. The film may be wound into a roll. A PSA formulation is provided, the release liner is unwound, and the PSA is coated and dried onto the release coated side of the liner. The polymer film roll is unwound and, for example, in-line laminated onto the PSA. The casting sheet (if any) is stripped off from the polymer film surface, and the linered self-adhesive polymer film is wound into a roll when the final construction is wound into a roll, it will be appreciated that the backside of the siliconized release liner comes into contact with the surface of the polymer film.

As previously described herein, when the self-adhesive film is wound into a roll, the print surface becomes contaminated with silicone that is transferred from the back side of the release liner, which impacts the wetting or spreading characteristics of solvent and aqueous inks. (*see, e.g.,* FIG. 3, which illustrates area distributions of dot-like features printed onto white pigmented vinyl film that were not exposed to a contaminated back surface of a liner (graph (a)) and those that were exposed to the liner back surface (graph (b))). While not being bound to any particular theory, the mechanism by which the silicone contamination of the print film surface is believed to occur as follows: Silicone release coatings may contain residual silicone in the form of monomers or oligomers that have not been cured during formation of the release coating carry through the coating and curing process. Some of the residual silicone transfers from the front side onto the liner backside when the liner is wound in a roll, and the liner backside comes into contact with the siliconized face. The amount of silicone transferred to the backside of the liner depends on the condition of the roll and the environmental conditions to which the roll is exposed including, for example, contact time (of the release surface and the backside surface), temperature, and pressure. The residual silicone on the liner backside may then be transferred onto the polymer film face when the final adhesive film structure is wound into a roll. Similar to the transfer of residual silicone from the release surface to the liner backside, the amount of silicone transferred from the liner backside to the polymer film face in the final construction depends on various conditions including the contact time between the surfaces, temperature, and pressure. FIG. 4 depicts silicone levels detected on the liner backside of a vinyl print film as a function of time, pressure, and temperature.

Print defects, i.e., regions of the print film printing with different resolutions, result when the silicone distribution on the polymer film surface is non-uniform. FIG. 5 illustrates the variation of print resolution as a function of exposure to a liner backside contaminated with silicone. The image (a) shows a vinyl film having a portion exposed to a siliconized liner back surface and a portion exposed to a non-siliconized liner back surface. In the image, the area exposed to the silicone liner back surface exhibits less ink spread (and therefore higher resolution). Graph (b) shows the area distribution of the dot-like features at the different regions of the film shown in image (a). This creates significant challenges with respect to reliably manufacturing film rolls that yield consistent and uniform prints. Non-uniform distribution may result from many variables in the film manufacturing process including, for example, non-uniform contact between the liner backside and the polymer film face when the film is in roll form, non-uniform distribution of silicone on the liner backside, combinations of such variables, and the like. Non-uniform contact between the liner backside and the film face when the film is in roll form may result from inter-layer air entrapment and/or caliper variations of the release liner, the print film, the adhesive, or combinations of two or more thereof. Because inter-layer contact in rolls changes with time, temperature, and pressure (trapped inter-layer air shifts around for instance), and because silicone diffusion is temperature dependent, the print resolution and uniformity of the prints also changes with time, temperature, and pressure (*see, e.g.,* FIG. 6).

The inventors have found that the problem of lack of uniformity and poor resolution in the ink jet printing on polymer films can be solved by incorporating a low surface energy additive into the print facestock layer. The technology ensures that the print resolution or print qualities across the lengths and widths of the film rolls are substantially uniform despite (1) non-uniform contact of the print film surface with the back of the release liner, and (2) possible non-uniform

distribution of silicone on the back of the release liner.

The ink spread determines print resolution and can be reflected by the dot area of dot like features printed onto the film. Ink spread produces larger dot areas and a decrease in resolution. The inventors have found that the incorporation of a low surface energy additive into the print layer decreases the dot area and provides a higher resolution print surface. Further, the print resolution of the polymeric films comprising the low surface energy additive do not change significantly with ageing. In one embodiment, a print film comprises a polymeric print layer comprising a low surface energy additive and has a first dot area when printed on a fresh film (which is a film that has been printed at room temperature within a day after being manufactured), and a second dot area when printed on film exposed to a temperature of 50 °C and a pressure of 0.01379 MPa (2 psi) for two weeks, the second dot area having a value within 20% of the first dot area; within 15% of the first dot area; within 10% of the first dot area; even within 5% of the first dot area. In one embodiment, the second dot area is within 0.1% to 20% of the first dot area; within 1 % to 17% of the first dot area; within 5% to 15% of the first dot area; even within 7.5% to 10% of the first dot area.

The technology can be utilized with films that are produced through a casting process or a calendering process. In particular, the technology can be employed with cast PVC films, where during the film formation process temperatures of up to 200°C are employed.

## TEST METHODS

The following test methods are to be employed to analyze various parameters or properties of print films formed in accordance with aspects of the invention.

## SURFACE SILICONE CONCENTRATION

The samples were analyzed using X-ray photoelectron spectroscopy to characterize the chemical compositions of the print film surfaces.

## DOT AREAS

The modified and control vinyl film samples were print tested using a Mimaki GP 604 S flat bed printer and SS2 solvent based inks. In a typical test, about 50000 dot-like features are first printed onto 15.24 cm x 15.24 cm (6 in x 6 in) area. Then the prints are scanned at a resolution of 1200 dpi using a Epson Perfection V700 PHOTO scanner. The scanned images are subjected to image analysis using a custom written Matlab program to obtain the dot area distribution parameters such as the means and standard deviations.

## THICKNESS

Film thickness is measured using a TMI Model 49-70 Precision Micrometer available from Testing Machines Inc., in Ronkonkoma, NY. The specimen is placed between an upper and a lower anvil. The upper anvil rests on top of the specimen and the thickness is measured and displayed on the digital readout.

## CIE L*a*b* COLOR SPACE

This test is used to describe the color of a sample. This 3-dimensional color space system was developed by the International Commission on Illumination (CIE), and defines L* as representing the lightness of the color, ranging from 0 (black) to 100 (white). In this system, a* represents the color's position along the red (magenta)/green axis, in which negative values represent green and positive values represent red or magenta, and b* represents the color's position along the blue/yellow axis, in which negative values represent blue and positive values represent yellow. The test is conducted using a COLOR I5 Benchtop Spectrophotometer available from X-Rite, Inc., Grand Rapids, Michigan. The test method is TAPPI T524 om-94.

## ACCELERATED WEATHERING

The accelerated weathering test simulates the damaging effects of long term outdoor exposure of materials by exposing test samples to light, moisture and temperature extremes. A sample is tested and observed for lightfastness (fading of colors) and weatherability (cracking, chalking, curling, shrinkage, etc.). An Atlas CI65A Xenon Arc Weather-o-meter from Atlas Material Testing Technology LLC in Chicago, IL is used to weather a sample.

A printing pattern with white, yellow, magenta, cyan and black stripes are first printed on a printable substrate. The clear film of the current invention is then laminated over the print layer to make a film laminate through the use of

a pressure sensitive adhesive. The sample is first tested for CIE L*a*b* Color Space before being placed in the Weather-o-meter. The sample is allowed to age in the weather-o-meter for a designated amount of time. The sample is taken out of the Weather-o-meter for a CIE L*a*b* Color Space reading and observation of any changes in the film such as, for example, shrinkage, chalking, cracking etc. If there is no visible change after 2000 hours, and the changes in L*, a* and b* together, represented by ΔE, is less than 10, the sample is given a pass grade. ΔE value is calculated using the following formula:

$$\Delta E = \sqrt{(\Delta L^2 + \Delta a^2 + \Delta b^2)}$$

**GLOSS**

Gloss is measured using a BYK Gardner Micro-TRI-Gloss Gloss Meter from BYK Gardner USA in Columbia, MD. The universal measurement angle of 60° is used for the measurement. Typically an acceptable gloss reading is 80 or higher.

**TENSILE STRENGTH AND TENSILE ELONGATION**

The tensile elongation of the film is tested using mechanical properties measurement techniques, e.g., Instron. A modified ASTM D882 was used to determine the tensile strength and percentage elongation of the films of the present invention. The procedure is as follows:

1. 1. A 2.54 cm x 10.16 cm (1" x 4") specimen was cut out in the machine direction.
2. 2. Grip the film 2.54 cm (1") from the end at both the ends, so the separation between the grips is 5.08 cm (2 inches).
3. 3. Set the crosshead speed at 3.048 dm per minute (12 inches per minute ("ipm")).
4. 4. Obtain the tensile strength, which is the product of tensile stress times the thickness of the film. The tensile strength at break is the maximum stress occurs at break times the thickness of the film.
5. 5. The % elongation is reported by the machine.

The standard requires a minimum ultimate elongation of 180% and a minimum tensile strength of 0.00345 MPa (0.5 pound per square inch ("psi")). The presence or absence of PSA on the film does not appreciably alter the strength and/or elongation of the film. As such, wherever the film in the examples below includes PSA, the tensile elongation test was performed using film without the layer of PSA.

**RIVET TESTING**

Test samples approximately 6.35 cm x 6.35 cm (2.5" x 2.5") are applied over painted 10.16 cm x 30.48 cm (4" x 12") aluminum panels from Frontier Tank Center in Richfield, Ohio. Brazier rivet heads having dimensions of 11.4 mm (diameter) X 3.3 mm (height) X 7.62 mm (shaft diameter) (0.45" (diameter) X 0.13" (height) X 0.3" (shaft diameter)) are uniformly distributed over the aluminum panel. The rivet application is done so as to minimize forming any wrinkles especially around these rivet heads. Entrapped air is released with the use of pin pricks, while a brush with hard bristles and plastic squeegee is used to get the best conformation of the film around the rivet. The sample is dwelled for 24 hours at ambient condition. The diameter of the lifted portion of the film around the rivet is measured and recorded. The sample is then placed in QUV using a UVB 313 bulbs for 1000 hours. The sample is then taken out and the diameter of the film lifted around the rivets is measured again. When the change in diameter is less than 0.381 cm (0.15") for unprinted material or 0.508 cm (0.2") for printed material, the sample is given a pass grade.

**SHRINKAGE TEST**

The test sample is coated with a pressure sensitive adhesive under the trade name S8072 from Avery Dennison Corporation in Pasadena, CA at about 30 gram per square meter (gsm) coat weight. The sample is then attached to a clean aluminum panel from Q-Lab Corporation in Cleveland, OH. The sample is dwelled at ambient condition for 24 hours. A 12.7 cm (5") cross hatch in both machine direction (MD) and cross-machine direction (CD) are made on the film. The sample is then aged at 71.1 °C (160°F) for 48 hours. The dimension change in the MD and CD is measured. If the shrinkage is less than 0.076 cm (0.03") in both directions, the sample is given a pass grade.

**LONG TERM REMOVABILITY**

Test samples approximately 5.08 cm x 27.94 cm (2" x 11") are applied over 6.985 cm x 13.97 cm (2.75" x 5.5") painted aluminum panels from Frontier Tank Center in Richfield, Ohio. Excess material is folded upon itself to create a tab for removal. The sample is dwelled for 24 hours at room temperature, and then placed in a Xenon weatherometer under SAE J1960 test conditions. Samples are tested every 500 hours to a total duration of 2500 hours. Samples are tested for removal at multiple angles, typically 90°, 135°, and 180°. When the adhesive transfer to the panel is less than 25% and the film remains primarily intact, the sample is given a pass grade.

**STRESS RELAXATION**

Stress Relaxation measured the retained stress, or "memory" of a film that has been subjected to tensile stress. The stress relaxation of the film is tested using a mechanical properties measurement device, e.g. Instron. The procedure is as follows:

1. 1. Cut a sample of dimension 2.54 cm x 20.32 cm (1" x 8") using a ChemInstruments Rotary Die Slitter
2. 2. Set the gauge length between Instron grips to 15.24 cm (6")
3. 3. Grip the film by 2.54 cm (1") from both ends. If adhesive coated film is being tested, the release coated backing is removed after the sample is gripped.
4. 4. Set the crosshead speed to 10.16 cm/min (4"/min)
5. 5. The sample is elongated to 13% elongation, and held for 12 minutes.

The stress relaxation is reported as the minimum force measured during the held elongation. Stress relaxations less than 3.34 N (0.75 lb) are considered optimal for film conformability.

**EXAMPLES**

The chemicals used in the following examples are listed in Table 1 with information on the function, manufacture and location of each.

**Table 1.**

| Chemical Name | Function | Manufacturer | Location |
|---|---|---|---|
| GEON 178 | PVC RESIN | POLYONE | AVON LAKE, OH |
| UV531 | UV STABILIZER | CYTEC | WOODLAND PARK, NJ |
| HI SOL 10 | AROMATIC 100 SOLUTION | SUNOCO | PHILADELPHIA, PA |
| G-59 | PLASTICIZER | HALLSTAR | CHICAGO, IL |
| EDENOL 9777 | PLASTICIZER | COGNIS | MONHEIM, GERMANY |
| MARK 2181 | HEAT STABILIZER | CHEMTURA | PHILADELPHIA, PA |
| RHODASURF | SURFACTANT | SCHIBLEY SOLVENTS | ELYRIA, OH |
| TIO2 | PIGMENT | DUPONT | WILMINGTON, DE |
| PALAMOII 656 | PLASTICIZER | BASF | LUDWIGSHAFEN, GERMANY |
| B1360 | HEAT STABILIZER | BAERLOCHER | DOVER, OH |
| ELVALOY 742 | RHEOLOGY ADDITIVE | DUPONT | WILMINGTON, DE |

Example 1 (Reference Example; not in accordance with the invention). MPI 1005 Organosol Formulation (Control 1) - The MPI 1005 organosol consists of MPI 1005 Base (62.17 %), Mark 2181 (2.23 %), White Dispersion (30.41 %), Rhodasurf L4 (0.181 %), and Hi Sol 10 (5.01 %). The MPI 1005 Base has the composition: Geon 178 (59.96 %), UV 531 (2.4 %), Hi Sol 10 (28.78 %), G-59 Blend (7.05 %), Edenol 9777 (1.8 %); the White Dispersion has the composition: TiO2 (65 %), Edenol 9777 (22.35 %), Hi Sol 10 (12.65 %) and the G-59 Blend has the composition: G-59 Plasticizer (85 %), Hi Sol 10 (15 %).

Example 2 (Reference Example; not in accordance with the invention). MPI 1005 SC Organosol Formulation (Control 2) - The MPI 1005 SC organosol consists of MPI 1005 SC Base (55.86 %), White Dispersion (26.2 %), Hi Sol

10 (2.46 %), Elvaloy Dispersion (15.48 %). The MPI 1005 SC Base has the composition: Geon 178 (55.43 %), UV 531 (0.42 %), Hi Sol 10 (33.58 %), Palamoll 656 (8.92 %), Baerlocher B1360 (1.66 %); the White Dispersion has the composition: TiO2 (65 %), Palamoll (22.35 %), Hi Sol 10 (12.65 %); the Elvaloy Dispersion has the composition: Elvaloy 742 (20 %), Hi Sol 10 (80 %).

Example 3. Modified Organosols Films - The vinyl organosol formulations of example 1 and example 2 were modified by the addition of 0 (not in accordance with the present invention), 0.1 (not in accordance with the present invention), 0.5 (not in accordance with the present invention), 1 and 5 % by weight (on the basis of the solids content) of a low surface energy additive (Z-6173 from Dow Corning). The formulations were stirred to ensure a homogenous organosol, filtered, subjected to vacuum to remove air bubbles and cast onto PET casting sheets using a bullnose coater. The wet vinyl organosol films were dried and fused to yield 0.05 mm (2 mil) thick films.

The following procedures are used to cast the films and make the self adhesive constructions on a laboratory scale. The components are compounded together with stirring to obtain a homogenous organosol. The organosol is filtered, subjected to vacuum to remove air bubbles and cast onto PET casting sheets using a bullnose coater. The wet vinyl organosol coatings are dried and fused to yield 0.05 mm (2 mil) thick films. The backside of the PVC films are coated with a roughly 10 micron thick platimid tie layer, and finally, PSA coated release liners are laminated onto the tie layer side of the PVC films.

On a production scale, similar procedures are followed for the compounding, except of course on a much larger scale. The organosol is coated on to a moving web of PET, and then dried and fused in an oven bank to yield the film. The tie layer is coated onto the vinyl film inline. PSA coated liner is laminated on to the tie layer side, and the casting sheet is stripped off to yield the final roll material construction.

**RESULTS AND DISCUSSION**

Results and Discussion - The additive modified and control vinyl film samples were print tested using a Mimaki GP 604 S flat bed printer and SS2 solvent based inks. The samples were analyzed using X-ray photoelectron spectroscopy (XPS) to characterize the chemical compositions of the print film surfaces and atomic force microscopy to characterize the film surface morphologies.

XPS data show that the amount of siloxane at the surface of the films increases, as expected, with increase in the amount of siloxane added to the formulations (FIG. 7). AFM measurements indicate that the siloxane additive forms phase separated domains at the print film surfaces, and consistent with the XPS data, the atomic force microscope (AFM) images show an increase in the sizes and number densities of the domains with increase in the amount of siloxane added to the print film formulations (FIG. 8). Images (a), (b), (c), and (d) in FIG. 8 correspond to polymer films containing 0 (not in accordance with the present invention), 0.1 wt. % (not in accordance with the present invention), 0.5 wt. % (not in accordance with the present invention), and 1.0 wt. % of a siloxane additive.

The ink spread, which determines the print resolution, initially decreases sharply with increase of the surface siloxane level. The dependence becomes substantially more shallow when the surface silicon level increases past 3 Atomic % (FIG. 9). It indicates that: (1) vinyl films with added siloxane resulting in 3 Atomic % surface Si or greater (before any contact with the back of the release liner) will yield substantially uniform print resolutions across the lengths and widths of the rolls despite non-uniform contact of the print film surface with the back of the release liner and despite a possible non-uniform distribution of silicone on the back of the release liner; and (2) the film rolls do not have to be stored for any length of time to allow liner back side to film face silicone transfer to take place. Without being bound to any particular theory, the potential increase of the surface silicone level due to transfer from the liner back side will not result in a large change of the print resolution. Prior to the novel technology reported here, rolls of self adhesive films would have to be stored for relatively long periods of time in a warehouse so as to allow for silicone transfer and diffusion processes to engender a more or less uniform silicone distribution on the print film face.

The heat aging dependence of the film print characteristics were carefully investigated to explore the possibility that continued blooming of the additive could occur. Such a phenomenon would have the potential to cause print characteristics that depend on the thermal history of the film rolls, since, while the ink spread behavior is relatively insensitive to changes in the surface silicon level (when the surface silicon level is 3 Atomic % or greater), a large increase in the surface silicon level, say from 4 to 14 atomic %, would most likely have a discernable impact on the print characteristics.

Vinyl films were placed in contact with the release liner back sides at room temperature and 50°C for two weeks and 0.01379 MPa (2 psi), following which they were characterized through XPS, AFM and print testing. The data show that surface silicon levels (FIG. 10) and surface morphologies (FIG. 11) are quite stable with respect to heat aging. In agreement with this, it is found that the ink spread characteristics of the films maintained at room temperatures and 50°C are indeed quite similar (FIG. 12).

Thus PVC films modified with appropriate levels of siloxane exhibit substantially uniform print resolution or print qualities across the lengths and widths of the rolls despite non-uniform contact of the print film surface with the back of the release liner and despite a possible non-uniform distribution of silicone on the back of the release liner.

While the use of appropriate levels of low surface energy additive improves the print uniformity of the films and substantially removes the time dependence of the print resolution, these improvements would not be as useful if the additive degraded the visual and physical characteristics of the films. The base films were characterized through color, gloss and opacity measurements, and tensile and elongation measurements. The self adhesive film constructions were characterized through peel adhesion, rivet conformability, color, gloss, distinctness of image, liner release, long term removability, applied shrinkage, stress relaxation, and tensile and elongation measurements. Gloss and delta E data were also acquired for films subjected to accelerated weathering conditions. Data from extensive optical and physical tests conducted on the films show that the siloxane additive in fact does not deleteriously impact the properties of the films relative to the unmodified formulation **(Tables 2-10).**

**Table 2.**

| **Color, brightness, gloss and opacity of Example 2, with and without various amount of Z-6173.** | | | | | | | |
|---|---|---|---|---|---|---|---|
| Additive level (wt. %) | Color | | | Brightness | Gloss | | Opacity % |
| | L | a | b | | 20° | 60° | |
| 0 | 92.23 | -0.64 | -1.26 | 84.10 | 49.50 | 91.10 | 99.10 |
| 0.25 | 93.01 | -0.47 | -1.22 | 88.43 | 19.74 | 88.96 | 99.81 |
| 0.5 | 93.18 | -0.44 | -1.16 | 88.67 | 14.16 | 79.92 | 99.64 |
| 1.0 | 93.23 | -0.45 | -1.13 | 88.74 | 21.12 | 88.70 | 99.76 |

**Table 3.**
**Stress relaxation, dyne level, tensile and elongation of Example 2 with and without various amount of Z-6173.**

| Additive level (wt. %) | **0** | **0.25** | **0.5** | **1.0** |
|---|---|---|---|---|
| Stress Relaxation (lbf): | | | | |
| Stress Relaxation, fresh samples | **0.26** | **0.26** | **0.26** | **0.22** |
| Stress Relaxation, heat aged samples | **0.32** | **0.29** | **0.33** | **0.35** |
| | | | | |
| Dyne Level (dynes): | | | | |
| Dyne Level, dyne solutions | **35.7** | **32.3** | **33.3** | **32.7** |
| | | | | |
| Tensile and Elongation: | | | | |
| load @ 2%, machine direction, fresh sample | **2.46** | **2.28** | **2.33** | **2.39** |
| load @ 16%, machine direction, fresh sample | **3.56** | **3.37** | **3.41** | **3.49** |
| load @ 30%, machine direction, fresh sample | **4.05** | **3.89** | **3.94** | **4.02** |
| load @ break, machine direction, fresh sample | **6.04** | **6.94** | **6.95** | **6.68** |

| Additive level (wt. %) | 0 | 0.25 | 0.5 | 1.0 |
|---|---|---|---|---|
| elongation, machine direction, fresh sample | 228.78 % | 256.02 % | 249.60 % | 228.36 % |
| Young's Modulus, machine direction, fresh sample | 41385.8 | 32046.0 | 32140.8 | 35301.8 |
| load @ yield, machine direction, fresh sample | 6.35 | 7.11 | 7.13 | 6.84 |
| load @ 2%, machine direction, 1 wk heat aged sample | 2.45 | 2.37 | 2.71 | 2.74 |
| load @ 16%, machine direction, 1 wk heat aged sample | 3.58 | 3.67 | 4.09 | 4.08 |
| load @ 30%, machine direction, 1 wk heat aged sample | 4.15 | 4.30 | 4.74 | 4.71 |
| load @ break, machine direction, 1 wk heat aged sample | 5.51 | 6.31 | 6.26 | 7.11 |
| elongation, machine direction, 1 wk heat aged sample | 208.98 % | 211.08 % | 204.90 % | 225.96 % |
| Young's Modulus, machine direction, 1 wk heat aged sample | 44674.0 | 35264.4 | 39506.4 | 41726.0 |
| load @ yield, machine direction, 1 wk heat aged sample | 6.07 | 6.50 | 6.90 | 7.22 |

**Table 4. 180º peel adhesion on stainless steel of Example 2 with and without Z-6173.**

| **Additive Level (wt. %)** | **0** | **0.25** | **0.50** | **1.00** |
|---|---|---|---|---|
| | | | | |
| **180° Peel Adhesion (lbf):** | | | | |
| Peel, 180°, 15' applied, stainless steel, fresh (lbs) | **1.73** | **2.05** | **1.63** | **1.47** |
| Peel, 180°, 15' applied, stainless steel, heat aged (lbs) | **1.81** | **1.63** | **1.56** | **1.68** |
| | | | | |
| Peel, 180°, 24 hour applied, stainless steel, fresh (lbs) | **1.93** | **2.09** | **2.10** | **2.19** |
| **Additive Level (wt. %)** | **0** | **0.25** | **0.50** | **1.00** |
| Peel, 180°, 24 hour applied, stainless steel, heat aged (lbs) | **2.18** | **1.83** | **1.78** | **1.87** |

**Table 5. Color and gloss of Example 2 with and without Z-6173.**

| **Additive Level (wt. %)** | **0** | **0.25** | **0.50** | **1.00** |
|---|---|---|---|---|
| | | | | |
| Color, L value | **95.63** | **95.50** | **95.59** | **95.63** |
| Color, a value | **-1.14** | **-1.13** | **-1.13** | **-1.13** |
| Color, b value | **-0.29** | **-0.50** | **-0.53** | **-0.49** |
| | | | | |
| Gloss, 20° | **80.2** | **80.3** | **78.7** | **78.7** |
| Gloss, 60° | **90.9** | **91.8** | **91.2** | **90.7** |
| Gloss, 85° | **97.3** | **96.8** | **97.3** | **97.1** |

Table 6. Rivet conformability of Example 2 with and without various amount of Z-6173.

| Additive Level (wt. %) | 0 | 0.25 | 0.50 | 1.00 |
|---|---|---|---|---|
| | | | | |
| Rivet conformability - unprinted (inches): | | | | |
| 24 hours - MD | 0.061 | 0.086 | 0.076 | 0.056 |
| 250 hours in QUV - MD | 0.089 | 0.117 | 0.113 | 0.085 |
| 500 hours in QUV - MD | 0.086 | 0.107 | 0.105 | 0.082 |
| 750 hours in QUV - MD | 0.092 | 0.118 | 0.112 | 0.089 |
| 1000 hours in QUV - MD | 0.095 | 0.120 | 0.112 | 0.087 |
| 24 hours - CD | 0.057 | 0.102 | 0.071 | 0.056 |
| 250 hours in QUV - CD | 0.095 | 0.121 | 0.110 | 0.089 |
| 500 hours in QUV - CD | 0.093 | 0.124 | 0.105 | 0.088 |
| 750 hours in QUV - CD | 0.093 | 0.136 | 0.111 | 0.090 |
| 1000 hours in QUV - CD | 0.088 | 0.126 | 0.109 | 0.090 |
| | | | | |
| Rivet conformability - printed/overlaminated (inches): | | | | |
| 24 hours - MD | 0.092 | 0.112 | 0.122 | 0.130 |
| 250 hours in QUV - MD | 0.141 | 0.160 | 0.175 | 0.164 |
| 500 hours in QUV - MD | 0.150 | 0.161 | 0.171 | 0.161 |
| 750 hours in QUV - MD | 0.153 | 0.162 | 0.185 | 0.184 |
| 1000 hours in QUV - MD | 0.153 | 0.158 | 0.172 | 0.173 |
| 24 hours - CD | 0.089 | 0.121 | 0.132 | 0.137 |
| 250 hours in QUV - CD | 0.149 | 0.171 | 0.170 | 0.178 |
| 500 hours in QUV - CD | 0.141 | 0.171 | 0.178 | 0.177 |
| 750 hours in QUV - CD | 0.148 | 0.173 | 0.174 | 0.171 |
| 1000 hours in QUV - CD | 0.144 | 0.160 | 0.177 | 0.179 |
| | | | | |

Table 7. Long term removability of Example 2 with and without various amount of Z-6173.

| Additive Level (wt. %) | 0 | 0.25 | 0.50 | 1.00 |
|---|---|---|---|---|
| | | | | |
| Long Term Removability (printed/ overlaminated) - WOM | | | | |
| 500 hours in WOM | pass | pass | pass | pass |
| 1000 hours in WOM | pass | pass | pass | pass |
| 1500 hours in WOM | pass | pass | pass | pass |
| 2000 hours in WOM | pass | n/a | pass | n/a |

(continued)

| | | | | |
|---|---|---|---|---|
| **Long Term Removability (printed/ overlaminated) - WOM** | | | | |
| 2500 hours in WOM | **pass** | **n/a** | **pass** | **n/a** |
| **Long Term Removability (unprinted) - WOM** | | | | |
| 500 hours in WOM | **pass** | **pass** | **pass** | **pass** |
| 1000 hours in WOM | **pass** | **pass** | **pass** | **pass** |
| 1500 hours in WOM | **pass** | **pass** | **pass** | **pass** |
| 2000 hours in WOM | **pass** | **n/a** | **pass** | **n/a** |
| 2500 hours in WOM | **pass** | **n/a** | **pass** | **n/a** |

**Table 8. Shrinkage of Example 2with and without various amount of Z-6173.**

| **Additive Level (wt. %)** | **0** | **0.25** | **0.50** | **1.00** |
|---|---|---|---|---|
| **Applied Shrinkage on Aluminum (inches):** | | | | |
| Applied shrinkage, machine direction (inches) - fresh sample | **0.006** | **0.008** | **0.008** | **0.007** |
| Applied shrinkage, cross direction (inches) - fresh sample | **0.006** | **0.008** | **0.008** | **0.007** |

Table 9.
Stress relaxation, tensile and elongation of Example 2 with and without various amount of Z-6173.

| Additive Level | 0 | 0.25 | 0.50 | 1.00 |
|---|---|---|---|---|
| **Stress Relaxation (lbf):** | | | | |
| Stress Relaxation, printed samples | 0.51 | 0.41 | 0.43 | 0.44 |
| | | | | |
| **Tensile and Elongation:** | | | | |
| load @ 2%, machine direction, fresh sample | 2.31 | 2.43 | 2.30 | 2.12 |
| load @ 16%, machine direction, fresh sample | 3.53 | 3.61 | 3.45 | 3.33 |
| load @ 30%, machine direction, fresh sample | 4.17 | 4.17 | 4.02 | 3.98 |
| load @ break, machine direction, fresh sample | 7.71 | 6.72 | 6.66 | 7.11 |
| elongation, machine direction, fresh sample | 276.38 % | 216.48 % | 218.34 % | 242.22 % |
| Young's Modulus, machine direction, fresh sample (psi) | 14566.5 | 21962.2 | 54738.2 | 15299.4 |
| load @ yield, machine direction, fresh sample | 7.71 | 6.83 | 6.69 | 7.12 |
| load @ 2%, machine direction, 1 wk heat aged sample | 2.87 | 2.78 | 2.68 | 2.79 |
| load @ 16%, machine direction, 1 wk heat aged sample | 4.22 | 4.15 | 4.10 | 4.18 |
| load @ 30%, machine direction, 1 wk heat aged sample | 4.93 | 4.84 | 4.85 | 4.88 |
| load @ break, machine direction, 1 wk heat aged sample | 8.09 | 6.87 | 6.98 | 6.70 |
| elongation, machine direction, 1 wk heat aged sample | 278.58 % | 209.52 % | 210.96 % | 197.04 % |
| Young's Modulus, machine direction, 1 wk heat aged sample (psi) | 24756.0 | 23846.4 | 23664.8 | 24715.8 |
| load @ yield, machine direction, 1 wk heat aged sample | 8.09 | 7.03 | 7.14 | 6.84 |

**Table 10. Weathering data of Example 2 with and without various amount of Z-6173.**

<table>
<tr><th>Additive Level (wt. %)</th><th>0</th><th>0.25</th><th>0.50</th><th>1.00</th></tr>
<tr><td>Weathering Data - unprinted</td><td></td><td></td><td></td><td></td></tr>
<tr><td>20º Gloss - initial</td><td>80.2</td><td>80.3</td><td>78.7</td><td>78.7</td></tr>
<tr><td>20º Gloss - 250 hours</td><td>70.7</td><td>67.3</td><td>64.4</td><td>65.7</td></tr>
<tr><td>20º Gloss - 500 hours</td><td>65.7</td><td>62.4</td><td>60.6</td><td>59.8</td></tr>
<tr><td>20º Gloss - 750 hours</td><td>56.5</td><td>53.2</td><td>50.5</td><td>51.6</td></tr>
<tr><td>20º Gloss - 1000 hours</td><td>49.5</td><td>47.1</td><td>44.8</td><td>43.1</td></tr>
<tr><td>20º Gloss - 1250 hours</td><td>40.3</td><td>37.9</td><td>36.3</td><td>35.0</td></tr>
<tr><td>20º Gloss - 1500 hours</td><td>30.6</td><td>19.9</td><td>26.0</td><td>17.3</td></tr>
<tr><td>20º Gloss - 1750 hours</td><td>18.9</td><td rowspan="4">n/a</td><td>14.1</td><td rowspan="4">n/a</td></tr>
<tr><td>20º Gloss - 2000 hours</td><td>12.7</td><td>9.6</td></tr>
<tr><td>20º Gloss - 2250 hours</td><td>9.3</td><td>7.5</td></tr>
<tr><td>20º Gloss - 2500 hours</td><td>7.8</td><td>1.8</td></tr>
<tr><td>60º Gloss - initial</td><td>90.9</td><td>91.8</td><td>91.2</td><td>90.7</td></tr>
<tr><td>60º Gloss - 250 hours</td><td>90.8</td><td>89.8</td><td>88.7</td><td>89.1</td></tr>
<tr><td>60º Gloss - 500 hours</td><td>89.2</td><td>88.5</td><td>88.0</td><td>87.0</td></tr>
<tr><td>60º Gloss - 750 hours</td><td>85.7</td><td>84.4</td><td>83.5</td><td>83.1</td></tr>
<tr><td>60º Gloss - 1000 hours</td><td>82.7</td><td>81.4</td><td>80.5</td><td>84.8</td></tr>
<tr><td>60º Gloss - 1250 hours</td><td>77.2</td><td>76.0</td><td>75.0</td><td>74.1</td></tr>
<tr><td>60º Gloss - 1500 hours</td><td>71.1</td><td>62.1</td><td>67.8</td><td>71.1</td></tr>
<tr><td>60º Gloss - 1750 hours</td><td>60.9</td><td rowspan="4">n/a</td><td>54.5</td><td rowspan="4">n/a</td></tr>
<tr><td>60º Gloss - 2000 hours</td><td>54.5</td><td>49.3</td></tr>
<tr><td>60º Gloss - 2250 hours</td><td>49.3</td><td>45.2</td></tr>
<tr><td>60º Gloss - 2500 hours</td><td>44.6</td><td>21.5</td></tr>
<tr><td>85º Gloss - initial</td><td>97.3</td><td>96.8</td><td>97.3</td><td>97.1</td></tr>
<tr><td>85º Gloss - 250 hours</td><td>96.7</td><td>96.3</td><td>96.2</td><td>96.4</td></tr>
<tr><td>85º Gloss - 500 hours</td><td>98.4</td><td>98.8</td><td>98.3</td><td>97.9</td></tr>
<tr><td>85º Gloss - 750 hours</td><td>97.3</td><td>97.2</td><td>96.9</td><td>96.3</td></tr>
<tr><td>85º Gloss - 1000 hours</td><td>97.1</td><td>97.3</td><td>97.4</td><td>96.7</td></tr>
</table>

<table>
<tr><th>Additive Level (wt. %)</th><th>0</th><th>0.25</th><th>0.50</th><th>1.00</th></tr>
<tr><td>85º Gloss - 1250 hours</td><td>96.6</td><td>96.5</td><td>96.2</td><td>95.7</td></tr>
<tr><td>85º Gloss - 1500 hours</td><td>96.8</td><td>94.1</td><td>96.4</td><td>93.3</td></tr>
<tr><td>85º Gloss - 1750 hours</td><td>95.2</td><td rowspan="4">n/a</td><td>93.8</td><td rowspan="4">n/a</td></tr>
<tr><td>85º Gloss - 2000 hours</td><td>94.5</td><td>93.5</td></tr>
<tr><td>85º Gloss - 2250 hours</td><td>93.3</td><td>92.2</td></tr>
<tr><td>85º Gloss - 2500 hours</td><td>90.5</td><td>84.2</td></tr>
<tr><td>Delta E - 250 hours</td><td>0.341</td><td>0.306</td><td>0.219</td><td>0.273</td></tr>
<tr><td>Delta E - 500 hours</td><td>0.377</td><td>0.303</td><td>0.266</td><td>0.308</td></tr>
<tr><td>Delta E - 750 hours</td><td>0.361</td><td>0.300</td><td>0.286</td><td>0.286</td></tr>
<tr><td>Delta E - 1000 hours</td><td>0.503</td><td>0.370</td><td>0.322</td><td>0.380</td></tr>
<tr><td>Delta E - 1250 hours</td><td>0.525</td><td>0.398</td><td>0.351</td><td>0.408</td></tr>
<tr><td>Delta E - 1500 hours</td><td>0.469</td><td>0.380</td><td>0.481</td><td>0.326</td></tr>
<tr><td>Delta E - 1750 hours</td><td>0.535</td><td rowspan="4">n/a</td><td>0.548</td><td rowspan="4">n/a</td></tr>
<tr><td>Delta E - 2000 hours</td><td>0.566</td><td>0.651</td></tr>
<tr><td>Delta E - 2250 hours</td><td>0.655</td><td>0.651</td></tr>
<tr><td>Delta E - 2500 hours</td><td>0.705</td><td>0.900</td></tr>
</table>

**Reference Examples 4-7**

Siliconized PET liners are evaluated for their ability to transfer silicone to PVC film surfaces. The characteristics of the casting sheets are shown in Table 11. PVC films are cast out of organosol (MPI 1005 formulation) onto the siliconized casting sheets identified in Table 11 using either a reverse roll method or a die coating method. The calipers of the PVC films in all cases were about 0.05 mm (2 mils). In the case of the film cast onto the 2SLKN liner, the film thickness was about 0.04 mm (1.4 mils).

**Table 11.**

| Casting sheet | Silicone coat weight (g/m$^2$) |
|---|---|
| Mitsubishi 2SLKN | 0.1 |
| 0 % CRA | 0.99 |
| 50 % CRA | 0.91 |
| 100 % CRA | 1.12 |

Constructions corresponding to the product are made as follows. Pressure sensitive adhesive (PSA) is coated on to 90 lb release liner and dried to yield a final coat weight of about 32 gsm. The cast PVC films are then laminated onto the PSA. The forces required to peel off the casting sheets from the PVC films (full construction including PSA and liner) are reported below. The silicone levels on the surfaces of the cast PVC films are obtained through XPS measurements. The print qualities of the cast PVC films are determined visually after printing the films with a Mimaki GP 604 S printer using SS2 inks. The performances are rated on a scale of 1 to 4, where 1 denotes excellent print quality and 4 denotes poor print quality.

Table 12.

| Example | Casting sheet | Release force of casting sheet (g/in) | % atomic Si on PVC film surface after 5 days in contact with casting sheet | % atomic Si on PVC film surface after 5 weeks in contact with casting sheet | Print quality of PVC film surface after 5 days in contact with casting sheet | Print quality of PVC film surface after 5 weeks in contact with casting sheet |
|---|---|---|---|---|---|---|
| 4 | Mitsubishi 2SLKN | 1.7 | 3.9 | 4.4 | 4 | 2 |
| 5 | 0 % CRA | 1.4 | 1.7 | 0.0 | 3 | 3 |
| 6 | 50 % CRA | 3.3 | 2.3 | 2.7 | 2 | 1 |
| 7 | 100 % CRA | 5.0 | 2.1 | 2.0 | 1 | 4 |

**Reference Examples 8-12**

In Examples 8-12, the print film layer is cast onto a casting sheet designed to deliver low surface energy material to the print film. A polyester sheet is coated with a monolayer or thin layer of a Dow Corning Corporation 200 material, a PDMS material fluid, having viscosities of 50, 500 and 5000 $mm^2/s$ (cSt) (25 °C).

Silicone coated PET sheets are investigated for their ability to transfer silicone to PVC film surfaces. The characteristics of the sheets and PVC films following contact with the silicone coated PET sheets are illustrated in Table 13.

Table 13.

| Example | Casting Sheet Si Coating | Coat weight (gsm) | % atomic Si on PET surface | % atomic Si on PVC surface | Printability |
|---|---|---|---|---|---|
| 8 | 200 fluid, 50 cSt | 0.009 | 8.3 | 4.7 | Good |
| 9 | 200 fluid, 500 cSt | 0.010 | 11.4 | 5.9 | Good |
| 10 | 200 fluid, 5000 cSt | 0.009 | 11.9 | 4.0 | Good |
| 11 | SYL-OFF 7780 | 0.009 | 10.7 | 1.5 | Poor |
| 12 | C16 -olefin | 0.011 | 0.8 | 0.8 | Poor |

PVC films exposed to the silicone coated PET sheets yield very good printability, whereas PVC films exposed to the CRA and alpha-olefin do not.

**Claims**

**1.** A self adhesive print film comprising:

a polymeric layer having an upper surface and a lower surface, the polymeric layer adapted to receive a print media on the upper surface; and
an adhesive layer disposed on the lower surface of the polymeric layer;
wherein the polymeric layer is formed from a polymer formulation including a low surface energy additive distributed within the polymer layer,
wherein the polymeric layer comprises from 1 to 10 wt. % of the low surface energy additive,
wherein the low surface energy additive is a silicone-containing material chosen from a siloxane, and
wherein the low surface energy additive is not a part of a copolymer comprising a monomer or polymer component other than a low surface energy material and the low surface energy additive is not coated onto a surface of another additive.

**2.** The self adhesive print film of claim 1, wherein the low surface energy additive is chosen from a siloxane of the formula:

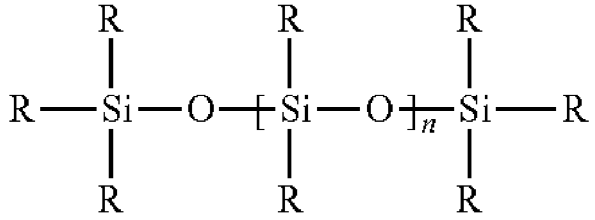

where the R groups are individually chosen from an alkyl group, an aryl group, an alkenyl group, an alkinyl group, an acyl group, an alkoxy group, a glycidyl group, or a combination of two or more thereof.

**3.** The self adhesive print film of claim 2, wherein the polymeric layer comprises at least 3 Atomic % of atomic Si at the upper surface of the polymeric layer, measured using X-ray photoelectron spectroscopy.

**4.** The self adhesive print film of any of claims 1-3, wherein the polymeric layer comprises polyvinyl chloride.

**5.** The self adhesive print film of any of claims 1-4, further comprising a release liner disposed over a lower surface of the adhesive layer, preferably wherein the release liner comprises a silicone release layer in contact with the lower surface of the adhesive layer, and a lower layer opposite the silicone release layer, the lower layer of the release liner comprising residual silicone on a lower surface thereof.

**6.** A method for improving the print resolution of a self adhesive film provided in a roll form, the method comprising:

providing a polymer film layer having an upper surface for receiving a print media thereon, and a lower surface opposite the upper surface;
providing an adhesive film layer on the lower surface polymer film layer; and
providing a release liner having an upper surface comprising a release coating thereon, and a lower surface, the lower surface of the release liner contacting the upper surface of the polymer film layer when the self adhesive film is wound about itself into a roll;
wherein the polymer film layer comprises from 1 to 10 wt. % of a low surface energy additive distributed within the polymer layer, wherein providing the polymeric layer comprising the low surface energy additive comprises providing a polymer formulation including the low surface energy additive and forming a film layer from the polymer formulation,
wherein the low surface energy additive is a silicone-containing material chosen from a siloxane, and
wherein the low surface energy additive is not a part of a copolymer comprising a monomer or polymer component other than a low surface energy material and the low surface energy additive is not coated onto a surface of another additive.

**7.** The method of claim 6, wherein the polymer layer comprises from 3 to 15 Atomic % of Si atoms at the upper surface of the polymer layer, measured using X-ray photoelectron spectroscopy.

**8.** The method of claim 6 or 7, wherein the polymer film layer comprises polyvinyl chloride.

## Patentansprüche

**1.** Selbsthaftender Druckfilm, umfassend:

eine Polymerschicht mit einer oberen Oberfläche und einer unteren Oberfläche,
wobei die Polymerschicht eingerichtet ist, ein Printmedium auf der oberen Oberfläche zu empfangen, und
eine Haftmittelschicht, angeordnet auf der unteren Oberfläche der Polymerschicht,
wobei die Polymerschicht aus einer Polymerformulierung gebildet ist, welche ein Additiv mit niedriger Oberflächenenergie, verteilt innerhalb der Polymerschicht, einschließt, wobei die Polymerschicht von 1 bis 10 Gew.-% des Additivs mit niedriger Oberflächenenergie umfasst,
wobei das Additiv mit niedriger Oberflächenenergie ein Silikon-enthaltendes Material, ausgewählt aus einem Siloxan, ist, und
wobei das Additiv mit niedriger Oberflächenenergie nicht Teil eines Copolymers ist, umfassend eine Monomer- oder Polymerkomponente, verschieden von einem Material mit niedriger Oberflächenenergie, und das Additiv

mit niedriger Oberflächenenergie nicht auf eine Oberfläche eines anderen Additivs beschichtet ist.

2. Selbsthaftender Druckfilm gemäß Anspruch 1, wobei das Additiv mit niedriger Oberflächenenergie aus einem Siloxan der Formel ausgewählt ist:

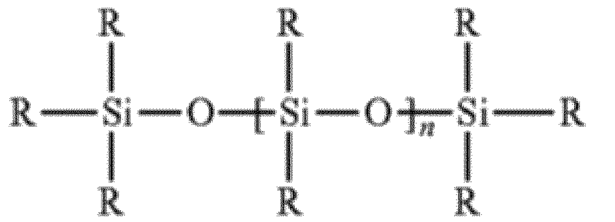

wobei die Gruppen R einzeln aus einer Alkylgruppe, einer Arylgruppe, einer Alkenylgruppe, einer Alkinylgruppe, einer Acylgruppe, einer Alkoxygruppe, einer Glycidylgruppe oder einer Kombination von zwei oder mehreren davon ausgewählt sind.

3. Selbsthaftender Druckfilm gemäß Anspruch 2, wobei die Polymerschicht mindestens 3 Atom-% von atomarem Si an der oberen Oberfläche der Polymerschicht, gemessen unter Verwendung von Röntgenphotoelektronenspektroskopie, umfasst.

4. Selbsthaftender Druckfilm gemäß einem der Ansprüche 1 - 3, wobei die Polymerschicht Polyvinylchlorid umfasst.

5. Selbsthaftender Druckfilm gemäß einem der Ansprüche 1 - 4, weiter umfassend eine Trennschicht, angeordnet über einer unteren Oberfläche der Haftmittelschicht, wobei die Trennschicht vorzugsweise eine Silikon-Trennschicht in Kontakt mit der unteren Oberfläche der Haftmittelschicht und eine untere Schicht, entgegengesetzt der Silikon-Trennschicht, umfasst, wobei die untere Schicht der Trennschicht restliches Silikon auf einer unteren Oberfläche davon umfasst.

6. Verfahren zum Verbessern der Druckauflösung eines selbsthaftenden Films, bereitgestellt in einer Rollenform, wobei das Verfahren umfasst:

das Bereitstellen einer Polymerfilmschicht mit einer oberen Oberfläche zum Empfangen eines Printmediums darauf und einer unteren Oberfläche entgegengesetzt der oberen Oberfläche,
das Bereitstellen einer Haftmittelfilmschicht auf der unteren Oberfläche der Polymerfilmschicht, und
das Bereitstellen einer Trennschicht mit einer oberen Oberfläche, umfassend eine Trennbeschichtung darauf, und einer unteren Oberfläche, wobei die untere Oberfläche der Trennschicht die obere Oberfläche der Polymerfilmschicht kontaktiert, wenn der selbsthaftende Film um sich selbst in eine Rolle gewickelt wird,
wobei die Polymerfilmschicht von 1 bis 10 Gew.-% eines Additivs mit niedriger Oberflächenenergie verteilt in der Polymerschicht umfasst, wobei das Bereitstellen der Polymerschicht, umfassend das Additiv mit niedriger Oberflächen-energie, das Bereitstellen einer Polymerformulierung, welche das Additiv mit niedriger Oberflächenenergie einschließt, und Bilden einer Filmschicht aus der Polymerformulierung umfasst,
wobei das Additiv mit niedriger Oberflächenenergie ein Silikon-enthaltendes Material, ausgewählt aus einem Siloxan, ist, und
wobei das Additiv mit niedriger Oberflächenenergie nicht Teil eines Copolymers ist, umfassend eine Monomer- oder Polymerkomponente, verschieden von einem Material mit niedriger Oberflächenenergie, und das Additiv mit niedriger Oberflächenenergie nicht auf eine Oberfläche eines anderen Additivs beschichtet ist.

7. Verfahren gemäß Anspruch 6, wobei die Polymerschicht von 3 bis 15 Atom-% Si-Atome an der oberen Oberfläche der Polymerschicht, gemessen unter Verwendung von Röntgenphotoelektronenspektroskopie, umfasst.

8. Verfahren gemäß Anspruch 6 oder 7, wobei die Polymerfilmschicht Polyvinylchlorid umfasst.

## Revendications

1. Film auto-adhésif d'impression, comprenant :

une couche polymère ayant une surface supérieure et une surface inférieure, la couche polymère étant adaptée pour réceptionner un milieu d'impression sur la surface supérieure ; et
une couche adhésive disposée sur la surface inférieure de la couche polymère ;
où la couche polymère est formée à partir d'une formulation polymère comprenant un additif de faible énergie surfacique distribué dans la couche polymère,
où la couche polymère comprend de 1 à 10% en poids de l'additif de faible énergie surfacique,
où l'additif de faible énergie surfacique est un matériau contenant de la silicone choisi parmi les siloxanes, et
où l'additif de faible énergie surfacique n'est pas une partie d'un copolymère comprenant un composant monomère ou polymère outre qu'un matériau de faible énergie surfacique et l'additif de faible énergie surfacique n'est pas appliqué sur une surface d'un autre additif.

**2.** Film auto-adhésif d'impression selon la revendication 1, où l'additif de faible énergie surfacique est choisi parmi un siloxane de formule :

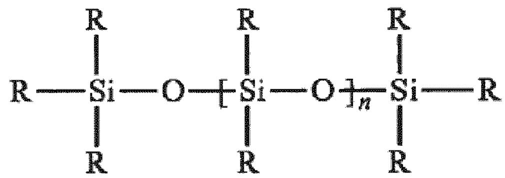

où les groupes R sont choisis individuellement parmi un groupe alkyle, un groupe aryle, un groupe alcényle, un groupe alcynyle, un groupe acyle, un groupe alcoxy, un groupe glycidyle ou une combinaison de deux ou plusieurs de ceux-ci.

**3.** Film auto-adhésif d'impression selon la revendication 2, où la couche polymère comprend au moins 3% en atomes de Si atomique sur la surface supérieure de la couche polymère, mesurée par spectroscopie photoélectronique des rayons X.

**4.** Film auto-adhésif d'impression selon l'une quelconque des revendications 1 à 3, où la couche polymère comprend du poly(chlorure de vinyle).

**5.** Film auto-adhésif d'impression selon l'une quelconque des revendications 1 à 4, comprenant en outre, une protection antiadhésive disposée sur la surface inférieure de la couche adhésive, de préférence où la protection antiadhésive comprend une couche antiadhésive de silicone en contact avec la surface inférieure de la couche adhésive, et une couche inférieure opposée à la couche antiadhésive de silicone, la couche inférieure de la protection antiadhésive comprenant une silicone résiduelle sur sa surface inférieure.

**6.** Procédé d'amélioration de la résolution d'impression d'un film auto-adhésif présenté sous forme d'un rouleau, le procédé comprenant :

la mise à disposition d'une couche de film polymère ayant une surface supérieure pour la réception d'un milieu d'impression sur celle-ci, et une surface inférieure opposée à la surface supérieure ;
la mise à disposition d'une couche de film adhésif sur la surface inférieure de la couche de film polymère ; et
la mise à disposition d'une protection antiadhésive ayant une surface supérieure comprenant un revêtement antiadhésif sur celle-ci, et une surface inférieure, la surface inférieure de la protection antiadhésive étant en contact avec la surface supérieure de la couche de film polymère lorsque le film auto-adhésif est enroulé sur lui-même pour former un rouleau ;
où la couche de film polymère comprend de 1 à 10% en poids d'un additif de faible énergie surfacique distribué dans la couche polymère, où la mise à disposition de la couche polymère comprenant l'additif de faible énergie surfacique comprend la mise à disposition d'une formulation polymère comprenant l'additif de faible énergie surfacique et la formation d'une couche de film à partir de la formulation polymère,
où l'additif de faible énergie surfacique est un matériau contenant de la silicone choisi parmi les siloxanes, et
où l'additif de faible énergie surfacique n'est pas une partie d'un copolymère comprenant un composant monomère ou polymère outre qu'un matériau de faible énergie surfacique et l'additif de faible énergie surfacique n'est pas appliqué sur une surface d'un autre additif.

**7.** Procédé selon la revendication 6, où la couche polymère comprend de 3 à 15% en atomes d'atomes de Si sur la

surface supérieure de la couche polymère, mesurée par spectroscopie photoélectronique des rayons X.

8. Procédé selon la revendication 6 ou 7, où la couche de film polymère comprend du poly(chlorure de vinyle).

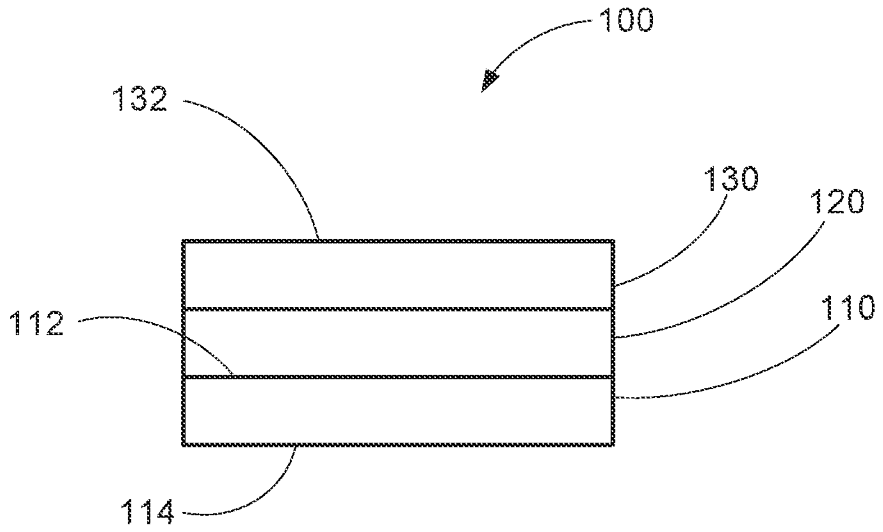


FIG. 1

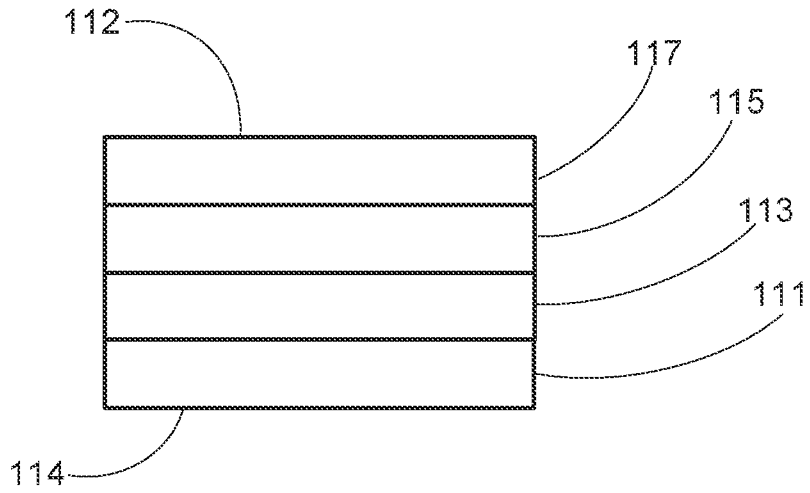


FIG. 2

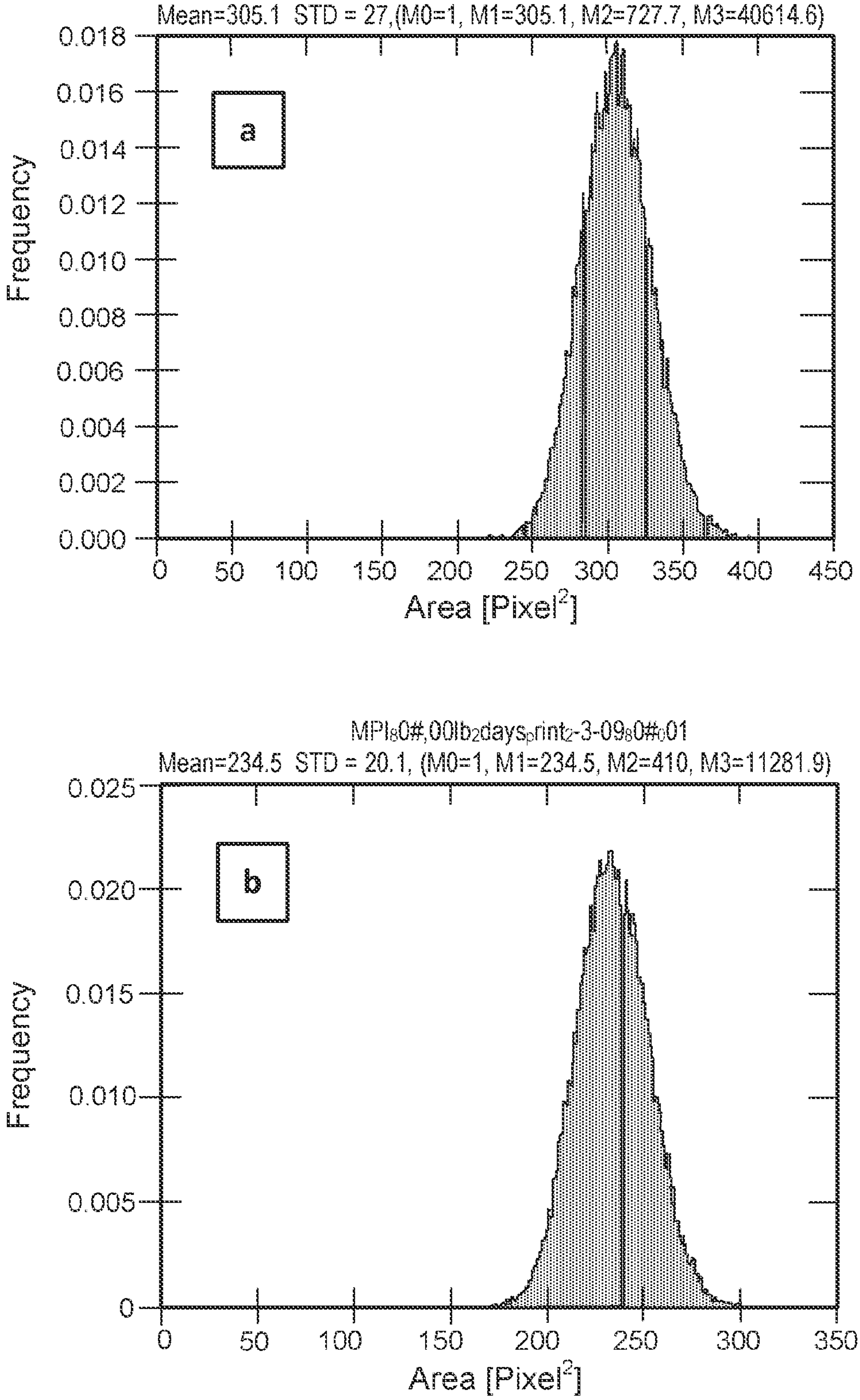
Mean=305.1 STD = 27,(M0=1, M1=305.1, M2=727.7, M3=40614.6)
a
Frequency
0.018
0.016
0.014
0.012
0.010
0.008
0.006
0.004
0.002
0.000
0
50
100
150
200
250
300
350
400
450
Area [Pixel$^2$]
MPI80#,00lb2daysprint2-3-0980#001
Mean=234.5 STD = 20.1, (M0=1, M1=234.5, M2=410, M3=11281.9)
b
Frequency
0.025
0.020
0.015
0.010
0.005
0
0
50
100
150
200
250
300
350
Area [Pixel$^2$]

FIG. 3

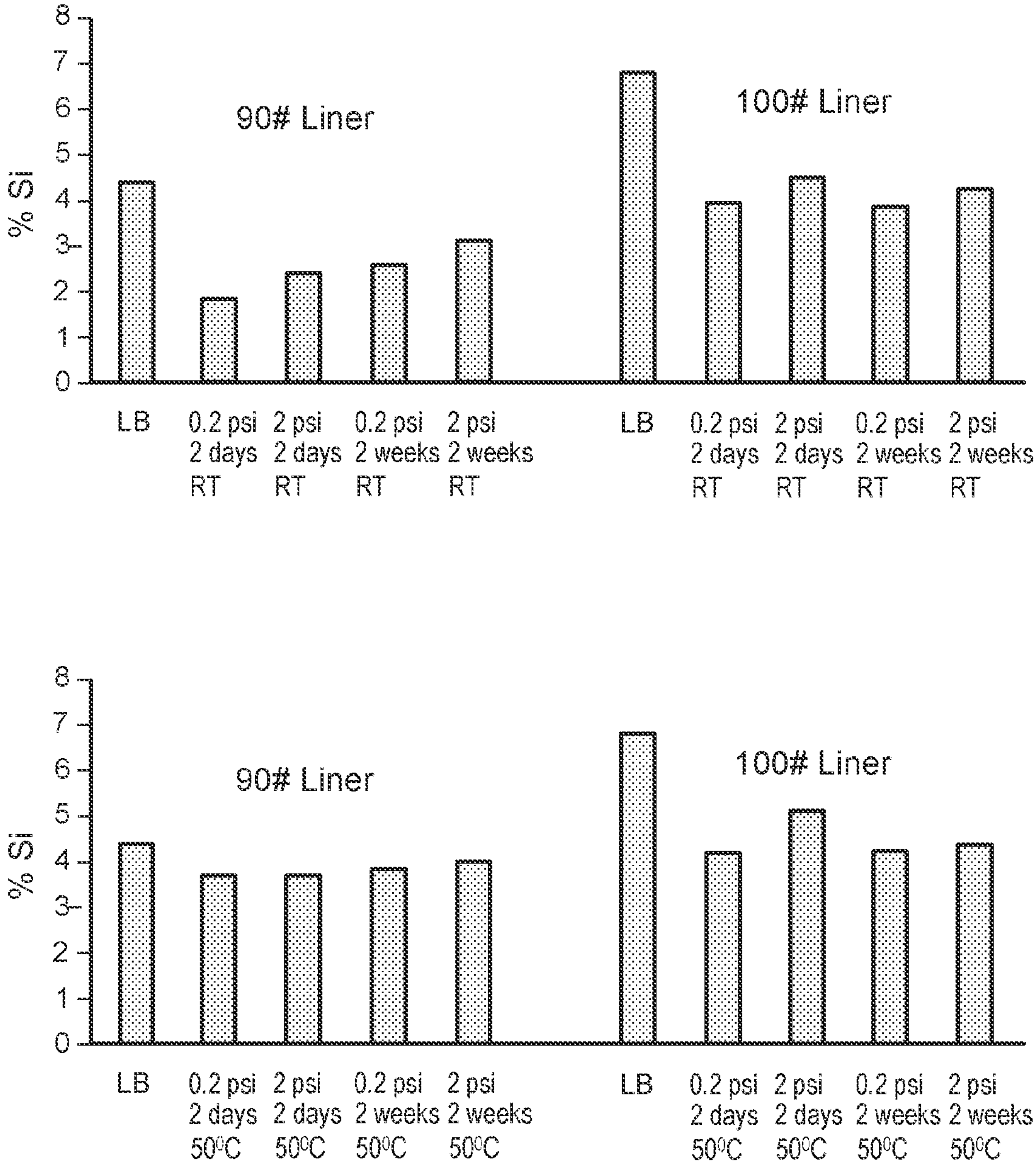
8
7
6
5
4
3
2
1
0
% Si
90# Liner
100# Liner
LB
0.2 psi 2 days RT
2 psi 2 days RT
0.2 psi 2 weeks RT
2 psi 2 weeks RT
LB
0.2 psi 2 days RT
2 psi 2 days RT
0.2 psi 2 weeks RT
2 psi 2 weeks RT
8
7
6
5
4
3
2
1
0
% Si
90# Liner
100# Liner
LB
0.2 psi 2 days 50⁰C
2 psi 2 days 50⁰C
0.2 psi 2 weeks 50⁰C
2 psi 2 weeks 50⁰C
LB
0.2 psi 2 days 50⁰C
2 psi 2 days 50⁰C
0.2 psi 2 weeks 50⁰C
2 psi 2 weeks 50⁰C

FIG. 4

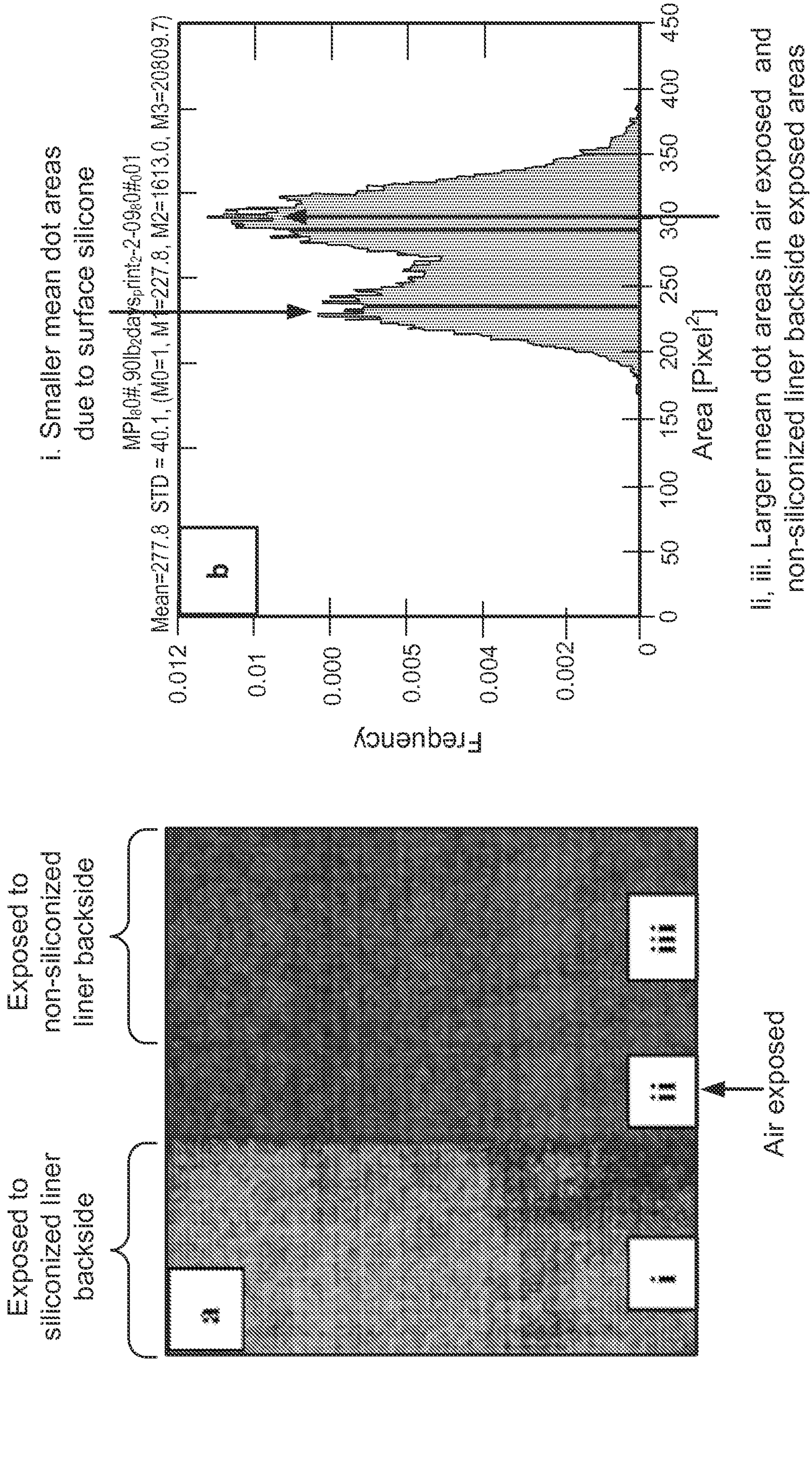

a
Exposed to siliconized liner backside
Exposed to non-siliconized liner backside
i
ii
iii
Air exposed
b
Mean=277.3 STD = 40.1, (M0=1, M1=227.8, M2=1613.0, M3=20809.7)
i. Smaller mean dot areas due to surface silicone
ii, iii. Larger mean dot areas in air exposed and non-siliconized liner backside exposed areas
Frequency
0.012
0.01
0.000
0.005
0.004
0.002
0
Area [Pixel²]
0
50
100
150
200
250
300
350
400
450


FIG. 5

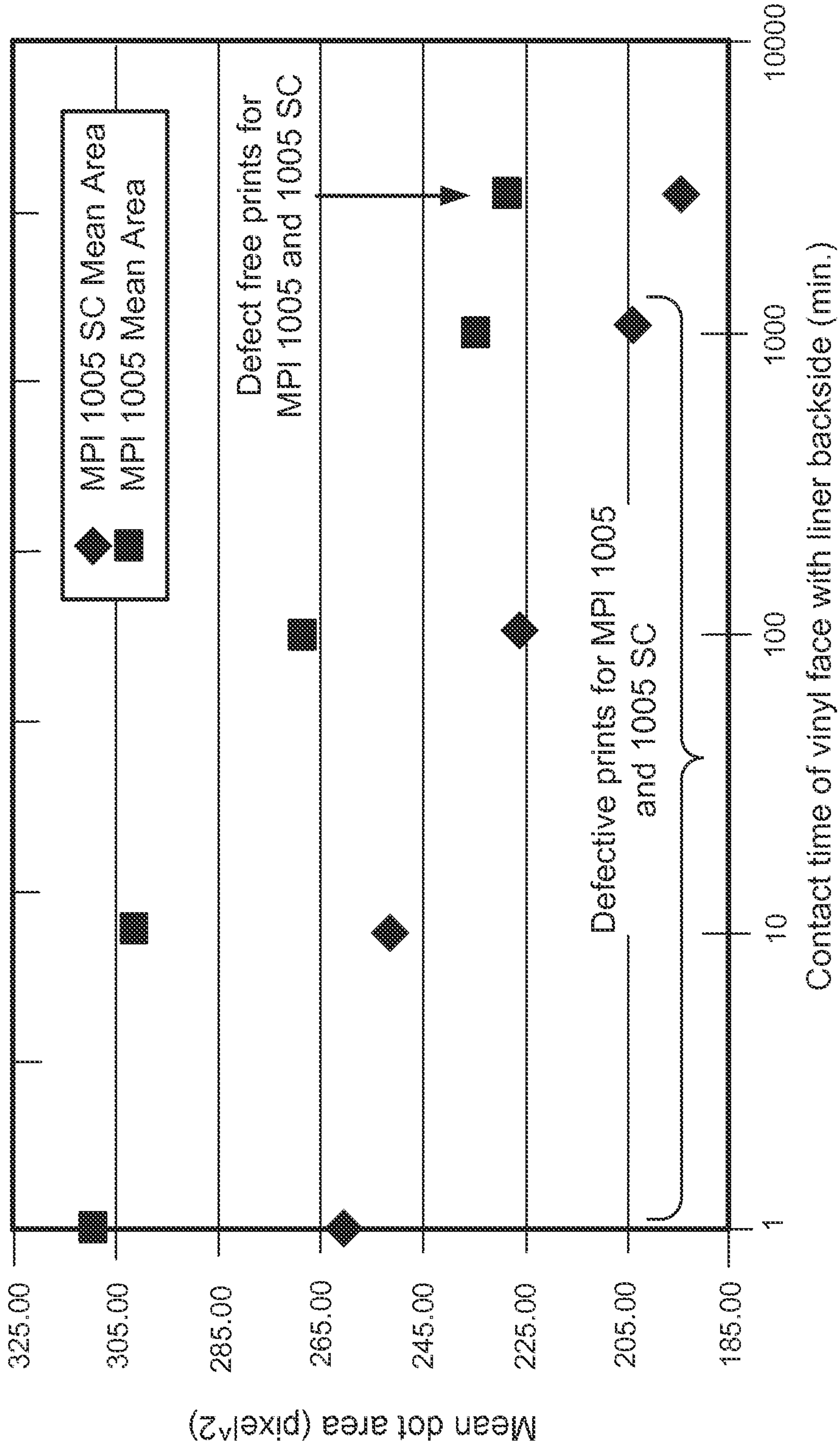
MPI 1005 SC Mean Area
MPI 1005 Mean Area
Defect free prints for
MPI 1005 and 1005 SC
Defective prints for MPI 1005
and 1005 SC
1
10
100
1000
10000
Contact time of vinyl face with liner backside (min.)
325.00
305.00
285.00
265.00
245.00
225.00
205.00
185.00
Mean dot area (pixel^2)

FIG. 6

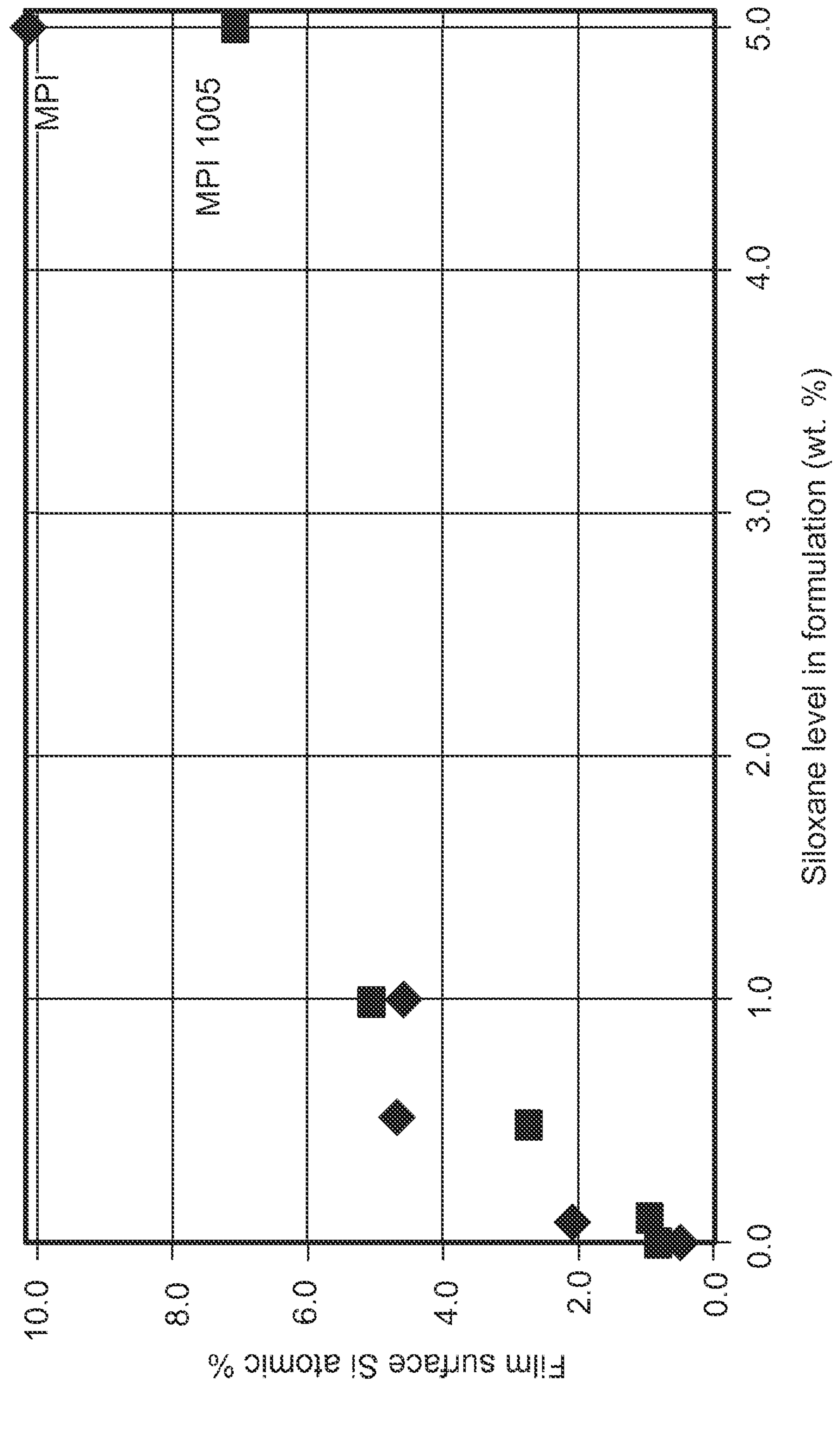
MPI
MPI 1005
Film surface Si atomic %
10.0
8.0
6.0
4.0
2.0
0.0
Siloxane level in formulation (wt. %)
0.0
1.0
2.0
3.0
4.0
5.0

FIG. 7

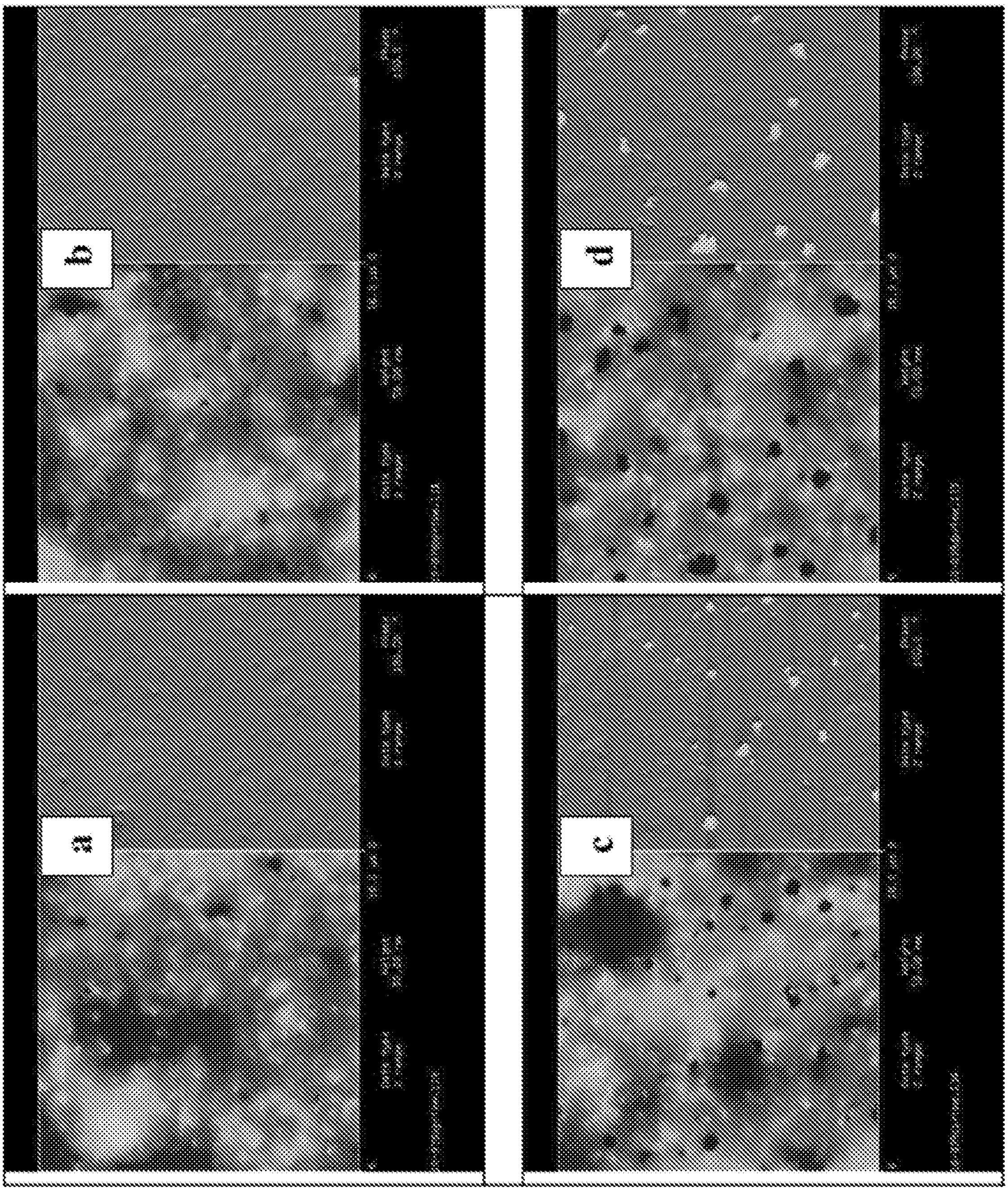


FIG. 8

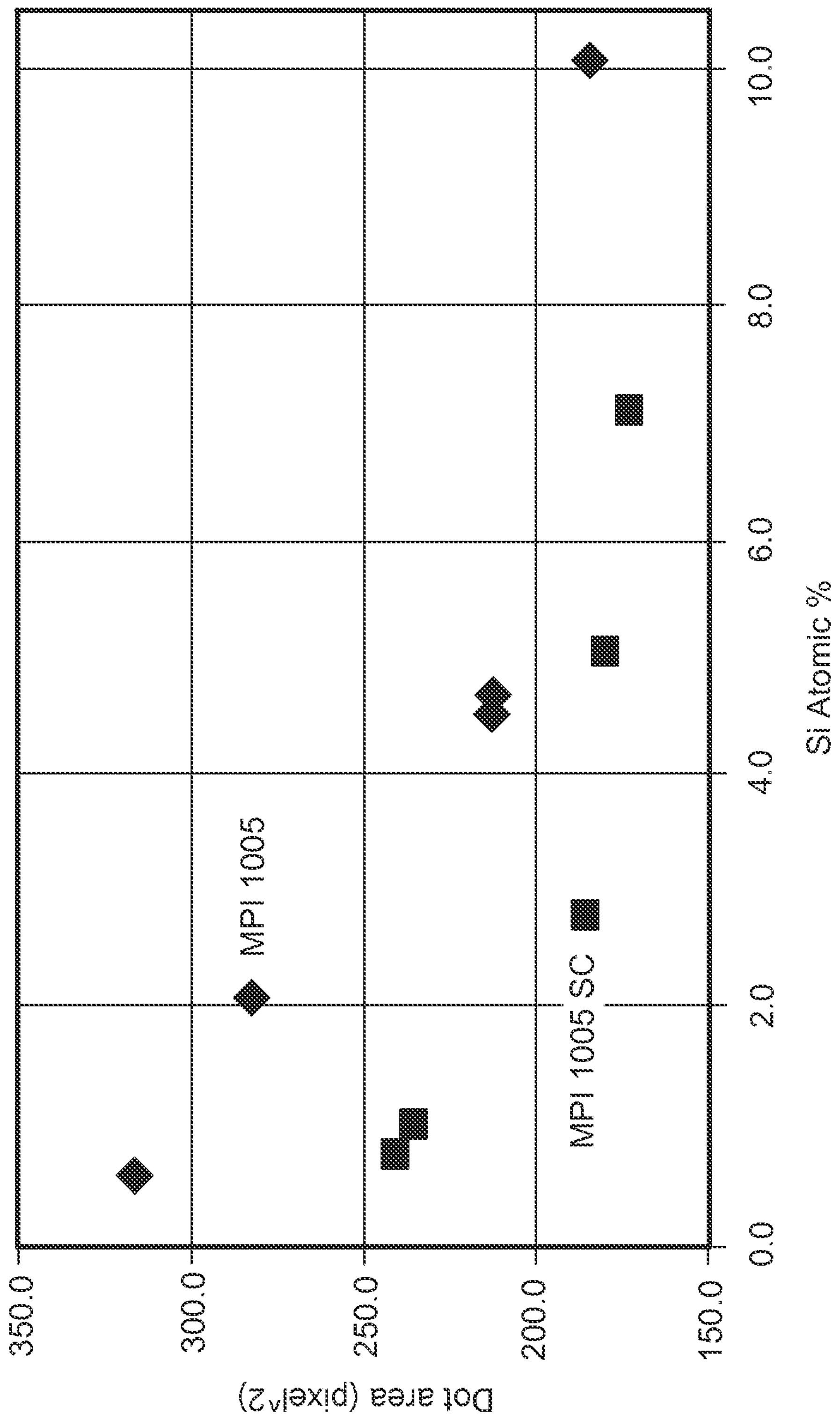

Dot area (pixel^2)
350.0
300.0
250.0
200.0
150.0
0.0
2.0
4.0
6.0
8.0
10.0
Si Atomic %
MPI 1005
MPI 1005 SC


FIG. 9

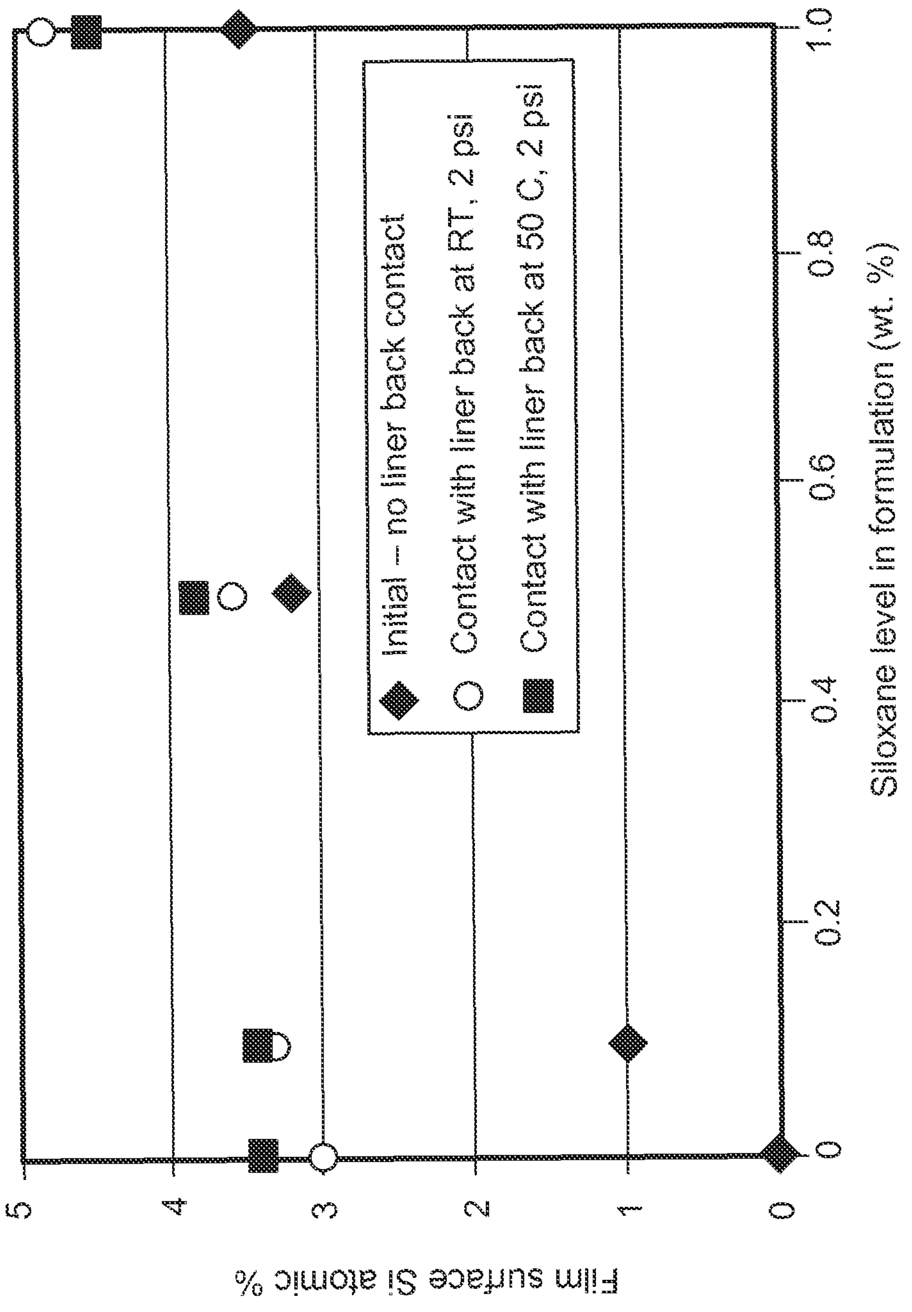
Initial – no liner back contact
Contact with liner back at RT, 2 psi
Contact with liner back at 50 C, 2 psi
Film surface Si atomic %
0
1
2
3
4
5
0
0.2
0.4
0.6
0.8
1.0
Siloxane level in formulation (wt. %)

FIG. 10

FIG. 11

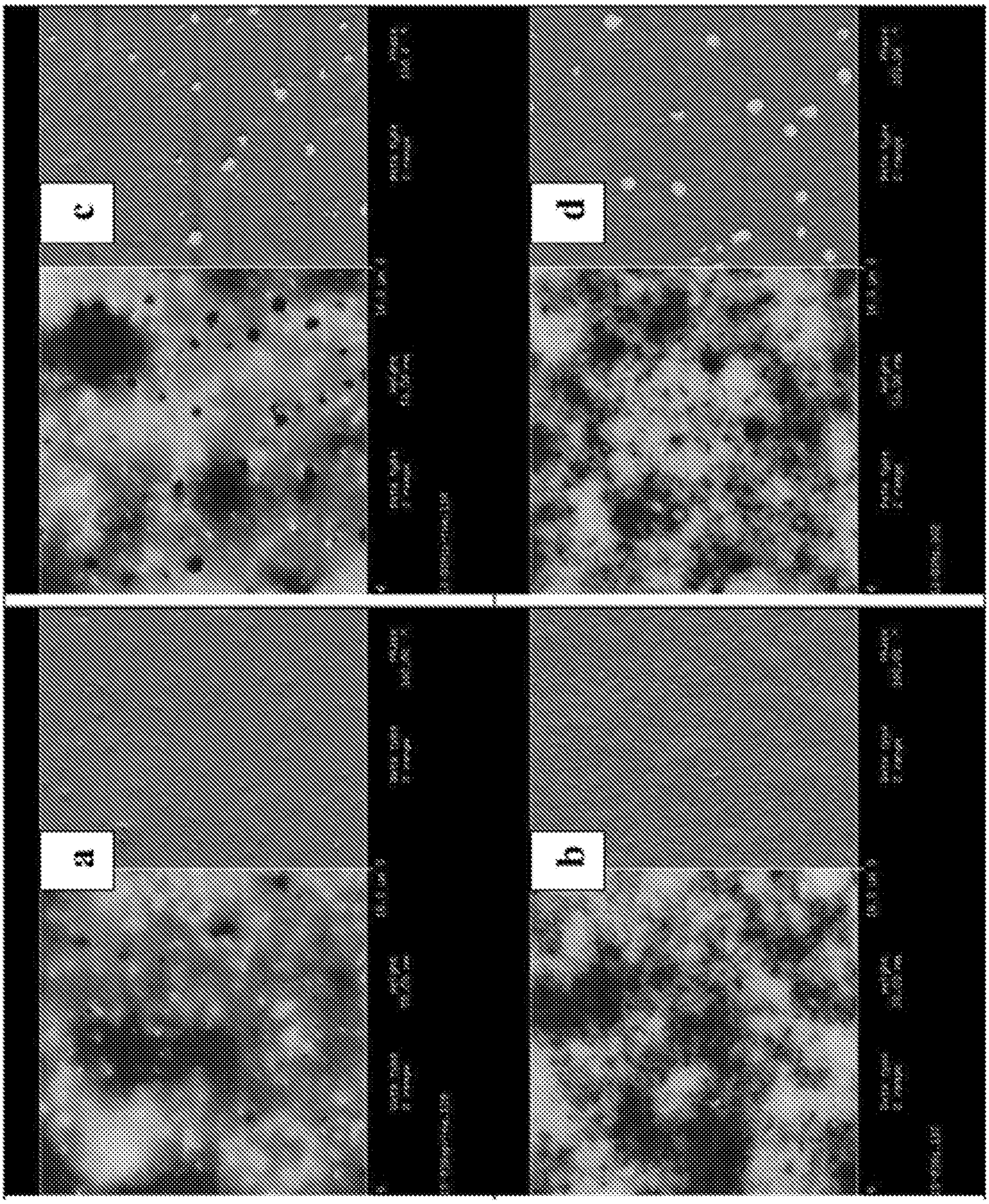

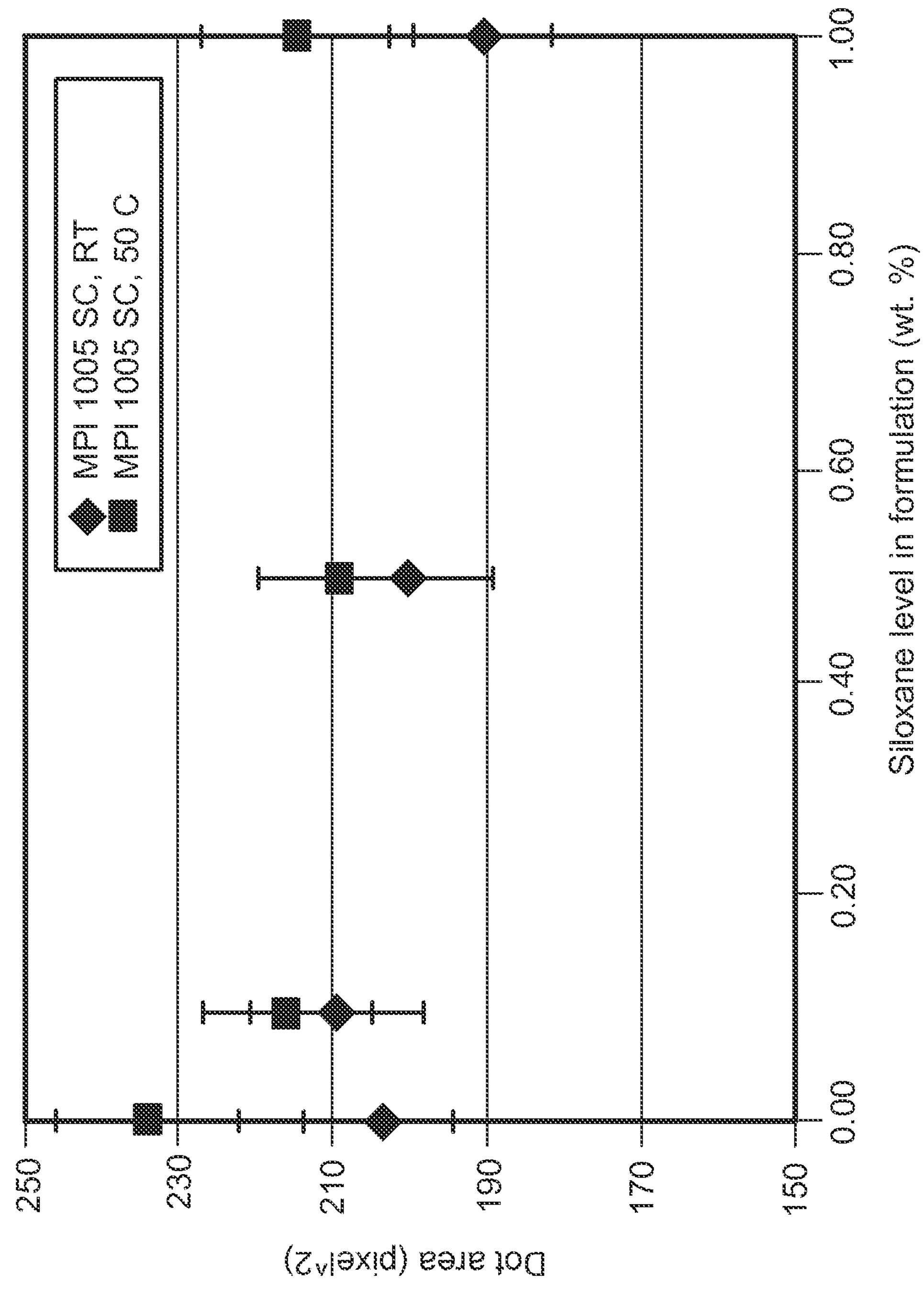
MPI 1005 SC, RT
MPI 1005 SC, 50 C
Dot area (pixel^2)
250
230
210
190
170
150
0.00
0.20
0.40
0.60
0.80
1.00
Siloxane level in formulation (wt. %)

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005054346 A1
- US 323788
- US 040642
- US 5192612 A
- US 5346766 A
- US 757535


### Non-patent literature cited in the description


- Adhesion and Bonding. Encyclopedia of Polymer Science and Engineering. Interscience Publishers, 1985, vol. 1, 476-546